# EUROPEAN PATENT APPLICATION

(11) **EP 4 243 482 A1**
(43) Date of publication of application: **13.09.2023**
(21) Application number: 21889518.3
(22) Date of filing: 02.11.2021
(51) Int. Cl.: H04W 24/08, H04W 28/02, H04W 80/10

(54) **QOS FLOW-RELATED MEASUREMENT**

(30) Priority: 05.11.2020 KR 20200146895; 09.02.2021 KR 20210018478
(71) Applicant: LG Electronics Inc., Yeongdeungpo-gu Seoul, 07336 (KR)
(72) Inventor: YOUN, Myungjune, Seoul 06772 (KR); KIM, Laeyoung, Seoul 06772 (KR)
(74) Representative: Maikowski & Ninnemann Patentanwälte Partnerschaft mbB
(86) International application number: PCT/KR2021/015697
(87) International publication number: WO 2022/098053

(57) **Abstract**

A disclosure of the present specification provides a method by which a UE performs measurement-related communication. The method may comprise the steps of: performing access measurement for a first QoS flow; determining that the access measurement for the first QoS flow is applied to a second QoS flow; and determining not to perform access measurement for the second QoS flow.

## Description

### TECHNICAL FIELD

The present disclosure relates to mobile communication.

### BACKGROUND ART

3rd generation partnership project (3GPP) long-term evolution (LTE) is a technology that enables high-speed packet communications. Many initiatives have been proposed for LTE goals, including those aimed at reducing user and provider costs, improving service quality, and expanding and improving coverage and system capacity. 3GPP LTE requires lower cost per bit, improved service availability, flexible use of frequency bands, simple structure, open interface, and proper power consumption of the terminal as upper-level requirements.

Work has begun at the International Telecommunication Union (ITU) and 3GPP to develop requirements and specifications for New Radio (NR) systems. 3GPP must identify and develop the technology components needed to successfully standardize a new Radio Access Technology (RAT) satisfying both urgent market needs and the long-term requirements determined in the ITU-R (International Mobile Telecommunications) international mobile telecommunications (IMT)-2020 process. In addition, NR must be able to use a spectral band in the range of at least 100 GHz that can be used for wireless communications even further into the future.

NR aims to be a single technology framework that covers all usage scenarios, requirements and deployment scenarios, including enhanced mobile broadband (eMBB), massive machine-type-communications (mMTC), ultra-reliable and low latency communications (URLLC), and more. NR may be essentially forward compatible.

Meanwhile, Multi-Access (MA) Protocol Data Unit (PDU) sessions were introduced in 5G. When an MA PDU session is used, multiple Quality of Service (QoS) flows may be used. In order to efficiently use multiple QoS flows, multiple QoS flows may be measured. However, conventionally, a method for efficiently measuring multiple QoS flows has not been discussed. For example, multiple QoS flows may be mapped to one radio resource (e.g., radio bearer). In this case, according to the prior art, measurement is performed for each QoS flow included in multiple QoS flows. Due to this, there is a problem in that radio resources and computing resources are wasted. In addition, when Packet Loss Ratio (PLR) measurement is performed for multiple QoS flows, there is a problem in that many resources are wasted.

### DISCLOSURE

### TECHNICAL PROBLEM

Accordingly, a disclosure of the present specification has been made in an effort to solve the aforementioned problem.

### TECHNICAL SOLUTION

In order to solve the above problems, one disclosure of the present specification provides a method for a UE to perform communication related to measurement. The method includes performing access measurement for a first QoS flow; determining that the access measurement for the first QoS flow is to be applied to a second QoS flow; and determining not to perform access measurement for the second QoS flow, based on that the access measurement for the first QoS flow is to be applied to the second QoS flow.

In order to solve the above problems, one disclosure of the present specification provides a UE performing communication related to measurement. The UE includes at least one processor; and at least one memory storing instructions and operably electrically connectable with the at least one processor; wherein operations performed based on the instructions being executed by the at least one processor include: determining that the access measurement for the first QoS flow is to be applied to a second QoS flow; and determining not to perform access measurement for the second QoS flow, based on that the access measurement for the first QoS flow is to be applied to the second QoS flow.

In order to solve the above problems, one disclosure of the present specification provides a device in mobile communication. The device includes at least one processor; and at least one memory that stores instructions and is operatively electrically connectable with the at least one processor, wherein operations performed based on execution of the instructions by the at least one processor include: determining that the access measurement for the first QoS flow is to be applied to a second QoS flow; and determining not to perform access measurement for the second QoS flow, based on that the access measurement for the first QoS flow is to be applied to the second QoS flow.

In order to solve the above problems, one disclosure of the present specification provides a non-transitory computer readable storage medium recording instructions. The instructions, when executed by one or more processors, cause the one or more processors to perform operations include: determining that the access measurement for the first QoS flow is to be applied to a second QoS flow; and determining not to perform access measurement for the second QoS flow, based on that the access measurement for the first QoS flow is to be applied to the second QoS flow.

In order to solve the above problems, one disclosure of the present specification provides a method for performing communication related to measurement by a UPF node. The method includes performing access measurement for a first QoS flow; determining that access measurement for the first QoS flow applies to a second QoS flow; and determining not to perform access measurement for the second QoS flow.

In order to solve the above problems, one disclosure of the present specification provides a UPF node that performs communication related to measurement. The UPF node may include at least one processor; and at least one memory storing instructions and operably electrically connectable with the at least one processor, wherein operations performed based on the instructions being executed by the at least one processor include: performing access measurement for a first QoS flow; determining that the access measurement for the first QoS flow is to be applied to a second QoS flow; and determining not to perform access measurement for the second QoS flow, based on that the access measurement for the first QoS flow is to be applied to the second QoS flow.

### ADVANTAGEOUS EFFECTS

According to the disclosure of the present specification, it is possible to solve the problems of the prior art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of a wireless device to which implementations of the present disclosure is applied.
FIG. 3 shows an example of a wireless device to which implementations of the present disclosure is applied.
FIG. 4 shows an example of a UE to which the implementation of the present specification is applied.
FIG. 5 shows an example of 5G system architecture to which implementations of the present disclosure is applied.
FIG. 6 is another exemplary diagram showing the structure of a radio interface protocol (Radio Interface Protocol) between the UE and the gNB.
FIG. 7 shows an example in which an MA PDU session is generated.
FIG. 8 shows an example of applying the ATSSS rule to the MA PDU session.
FIG. 9 is a diagram illustrating an example of a steering function of a UE.
FIG. 10 shows examples of conventional RTT measurement and improved RTT measurement.
FIG. 11 shows an example of packet loss ratio measurement.
FIGS. 12a and 12b show a first example of an operation according to a seventh example of the disclosure of the present specification.
FIGS. 13a and 13b show a second example of an operation according to a seventh example of the disclosure of the present specification.
FIG. 14 illustrates an example of an operation of a UE and/or an operation of a UPF according to the disclosure of the present specification.
FIG.15 shows an example of an operation related to PLR measurement according to the disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the attached drawings, user equipments (UEs) are shown for example. The UE may also be denoted a terminal or mobile equipment (ME). In addition, the UE may be a laptop computer, a mobile phone, a PDA, a smartphone, a multimedia device, or other portable device, or may be a stationary device such as a PC or a car mounted device.

Hereinafter, the UE is used as an example of a wireless communication device (or a wireless apparatus, or a wireless device) capable of wireless communication. An operation performed by the UE may be performed by a wireless communication device. A wireless communication device may also be referred to as a wireless apparatus, a wireless device, or the like. Hereinafter, AMF may mean an AMF node, SMF may mean an SMF node, and UPF may mean a UPF node.

The term "base station" used hereinafter generally refers to a fixed station that communicates with a wireless device and may be denoted by other terms such as evolved-NodeB (eNodeB), evolved-NodeB (eNB), Base Transceiver System (BTS), access point, or Next generation NodeB (gNB).

### I. Techniques and procedures applicable to the disclosure of the present specification

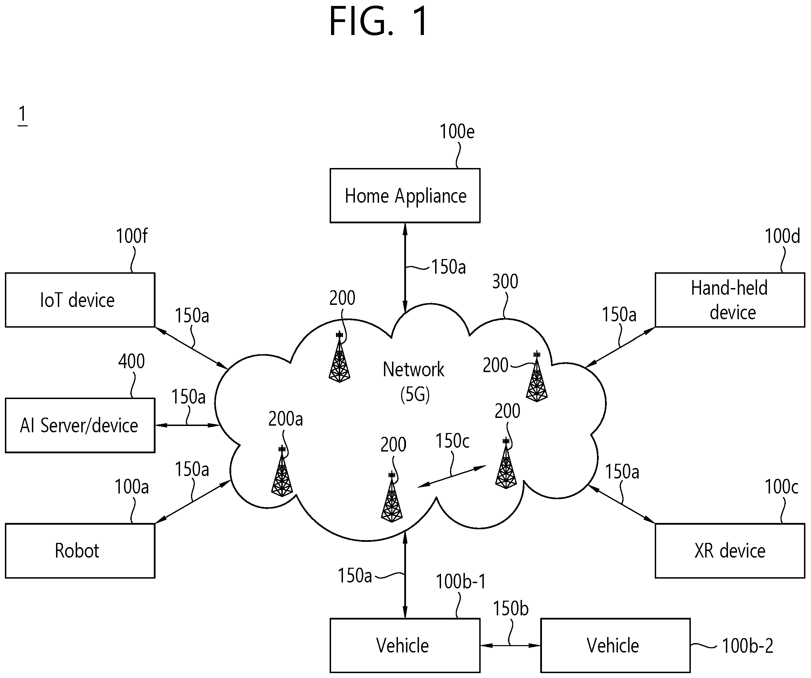

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

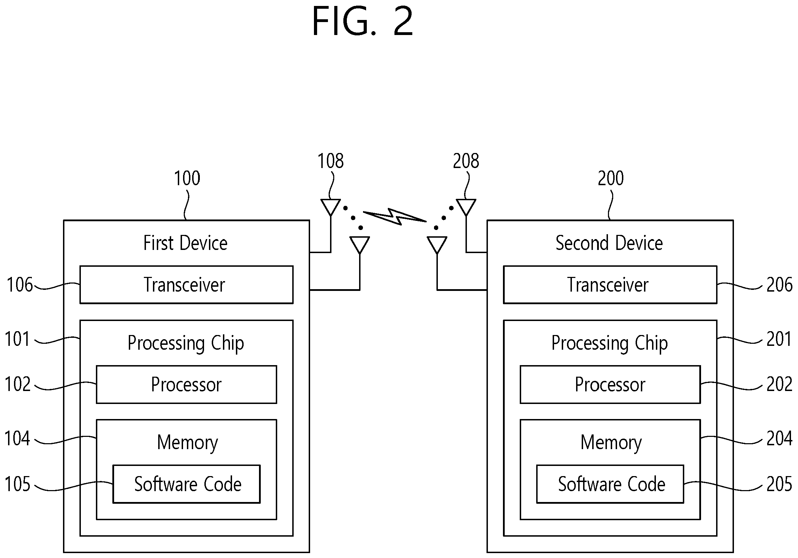

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) (or packet data units) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

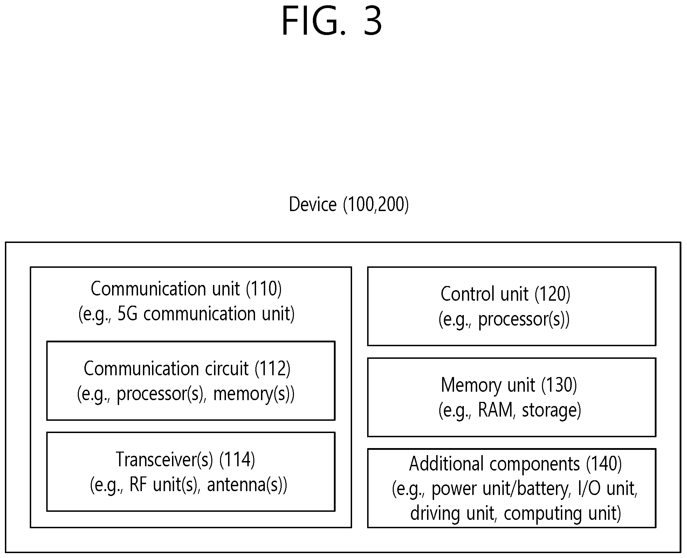

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

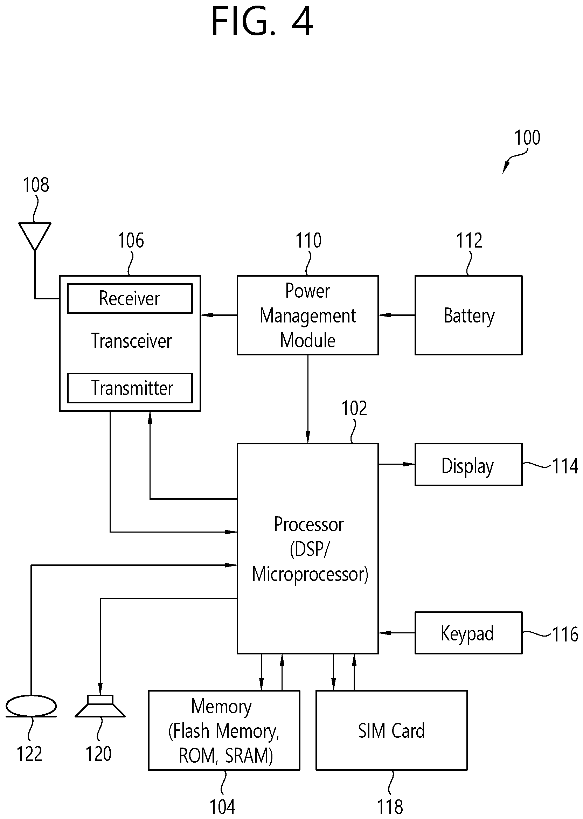

**FIG. 4** **shows an example of a UE to which the implementation of the present specification is applied.**

Referring to FIG. 4 , a UE 100 may correspond to the first wireless device 100 of FIG. 2 and/or the wireless device 100 or 200 of FIG. 3 .

The UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

Processor 102 may be configured to implement the descriptions, functions, procedures, suggestions, methods and/or operational flow diagrams disclosed herein. Processor 102 may be configured to control one or more other components of UE 100 to implement the descriptions, functions, procedures, proposals, methods and/or operational flow diagrams disclosed herein. Layers of radio interface protocols may be implemented in processor 102 . Processor 102 may include an ASIC, other chipset, logic circuit, and/or data processing device. Processor 102 may be an application processor. The processor 102 may include at least one of a digital signal processor (DSP), a central processing unit (CPU), a graphics processing unit (GPU), and a modem (modulator and demodulator). An example of processor 102 can be found in SNAPDRAGONTM series processors made by Qualcomm^{®}, EXYNOS^{™} series processors made by Samsung^{®}, A series processors made by Apple^{®}, HELIOTM series processors made by MediaTek^{®}, ATOMTM series processors made by Intel^{®} or the corresponding next-generation processor.

Memory 104 is operatively coupled to processor 102 and stores various information for operating processor 102. Memory 104 may include ROM, RAM, flash memory, memory cards, storage media, and/or other storage devices. When an implementation is implemented in software, the techniques described herein may be implemented using modules (e.g., procedures, functions, etc.) that perform the descriptions, functions, procedures, proposals, methods, and/or operational flow diagrams disclosed herein. A module may be stored in memory 104 and executed by processor 102. Memory 104 may be implemented within processor 102 or external to processor 102, in this case, it may be communicatively coupled with the processor 102 through various methods known in the art.

A transceiver 106 is operatively coupled to the processor 102 and transmits and/or receives wireless signals. The transceiver 106 includes a transmitter and a receiver. The transceiver 106 may include baseband circuitry for processing radio frequency signals. The transceiver 106 controls one or more antennas 108 to transmit and/or receive radio signals.

Power management module 110 manages power to processor 102 and/or transceiver 106 . The battery 112 supplies power to the power management module 110 .

Display 114 outputs the result processed by processor 102 . Keypad 116 receives input for use by processor 102 . Keypad 116 may be displayed on display 114 .

The SIM card 118 is an integrated circuit for securely storing international mobile subscriber identity (IMSI) and related keys, it is used to identify and authenticate subscribers in mobile phone devices such as cell phones and computers. Also, contact information may be stored on many SIM cards.

The speaker 120 outputs sound related results processed by the processor 102 . Microphone 122 receives sound-related input for use by processor 102.

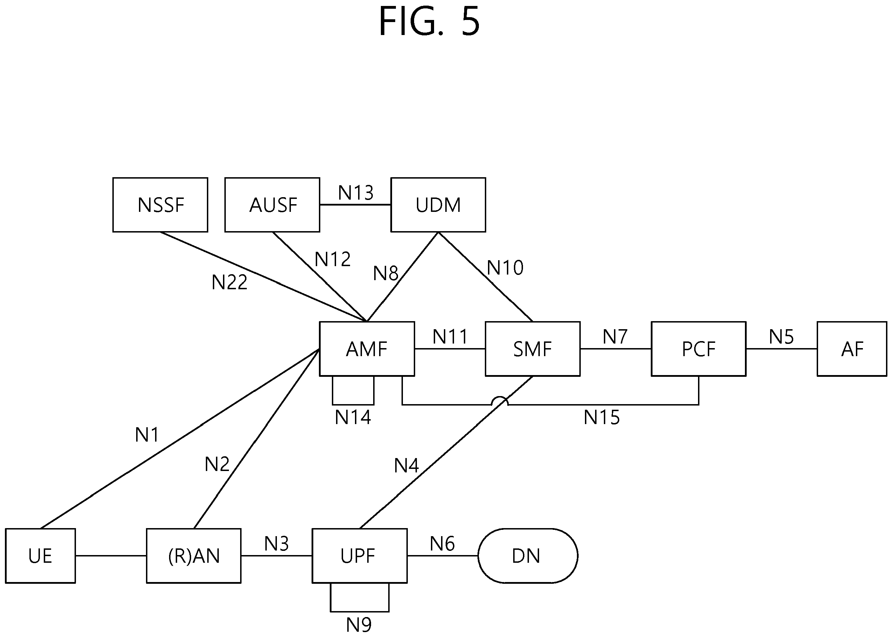

**FIG. 5** **shows an example of 5G system architecture to which implementations of the present disclosure is applied.**

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (SG-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 5 depicts the 5G system architecture in the non-roaming case, using the reference point representation showing how various network functions interact with each other.

In FIG. 5, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 5. For clarity, the NWDAF and its connections with other NFs, e.g., PCF, are not depicted in FIG. 5.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: represents a reference point between PCF and AMF, and a reference point between AMF and PCF of a visited network in a roaming scenario.
- N16: Reference point between two SMFs, (in roaming case between SMF in the visited network and the SMF in the home network).
- N22: Reference point between the AMF and the NSSF.
- N30: Reference point between PCF and NEF.
- N33: Reference point between AF and NEF.

In some cases, a couple of NFs may need to be associated with each other to serve a UE.

For reference, in FIG. 5, an AF by a third party other than an operator may be connected to 5GC through NEF.

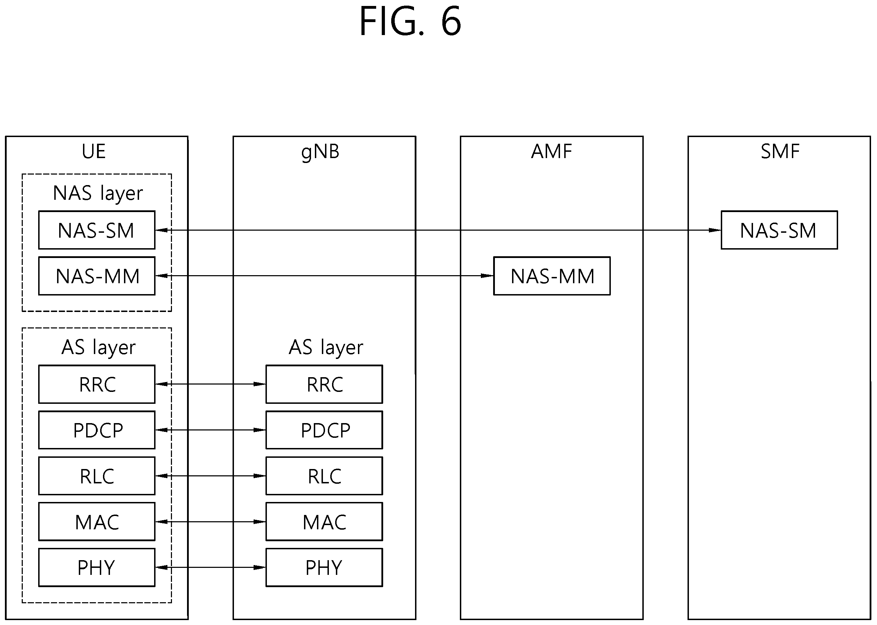

**FIG. 6** **is another exemplary diagram showing a structure of a radio interface protocol between a UE and a gNB.**

The radio interface protocol is based on the 3GPP radio access network standard. The radio interface protocol is horizontally composed of a physical layer, a data link layer, and a network layer, and is vertically divided into a user plane for transmission of data information and a control plane for transfer of control signal (signaling).

The protocol layers may be divided into L1 (first layer), L2 (second layer), and L3 layer (third layer) based on the lower three layers of the open system interconnection (OSI) reference model widely known in communication systems.

Hereinafter, each layer of the radio protocol will be described.

The first layer, the physical layer, provides an information transfer service using a physical channel. The physical layer is connected to an upper medium access control layer through a transport channel, and data between the medium access control layer and the physical layer is transmitted through the transport channel. In addition, data is transmitted between different physical layers, that is, between the physical layers of a transmitting side and a receiving side through a physical channel.

The second layer includes a medium access control (MAC) layer, a radio link control (RLC) layer, and a packet data convergence protocol (PDCP) layer.

The third layer includes radio resource control (hereinafter abbreviated as RRC). The RRC layer is defined only in the control plane and is in charge of control of logical channels, transport channels, and physical channels related to configuration, reconfiguration and release of radio bearers. In this case, RB refers to a service provided by the second layer for data transfer between the UE and the E-UTRAN.

The NAS layer performs functions such as connection management (session management) and mobility management.

The NAS layer is divided into a NAS entity for mobility management (MM) and a NAS entity for session management (SM).
1) NAS entity for MM provides the following functions in general.
   NAS procedures related to AMF include the following.
   - Registration management and access management procedures. AMF supports the following functions.
   - Secure NAS signal connection between UE and AMF (integrity protection, encryption)
2) The NAS entity for SM performs session management between the UE and the SMF.

The SM signaling message is processed, that is, generated and processed, at an NAS-SM layer of the UE and SMF. The contents of the SM signaling message are not interpreted by the AMF.
- In the case of SM signaling transmission,
- The NAS entity for the MM creates a NAS-MM message that derives how and where to deliver an SM signaling message through a security header representing the NAS transmission of SM signaling and additional information on a received NAS-MM.
- Upon receiving SM signaling, the NAS entity for the SM performs an integrity check of the NAS-MM message, analyzes additional information, and derives a method and place to derive the SM signaling message.

Meanwhile, in FIG. 6, the RRC layer, the RLC layer, the MAC layer, and the PHY layer located below the NAS layer are collectively referred to as an access stratum (AS).

A network system (i.e., SGC) for next-generation mobile communication (i.e., 5G) also supports non-3GPP access. An example of the non-3GPP access is typically a WLAN access. The WLAN access may include both a trusted WLAN and an untrusted WLAN.

In the system for 5G, AMF performs registration management (RM: Registration Management) and connection management (CM: Connection Management) for 3GPP access as well as non-3GPP access.

A Multi-Access (MA) PDU session using both 3GPP access and non-3GPP access may be used.

The MA PDU session is a PDU session that can be serviced simultaneously with 3GPP access and non-3GPP access using one PDU session.

### <Multi-Access (MA) PDU session>

In the prior art, the MA PDU session is a session that can be serviced simultaneously with 3GPP access and non-3GPP access using one PDU session.

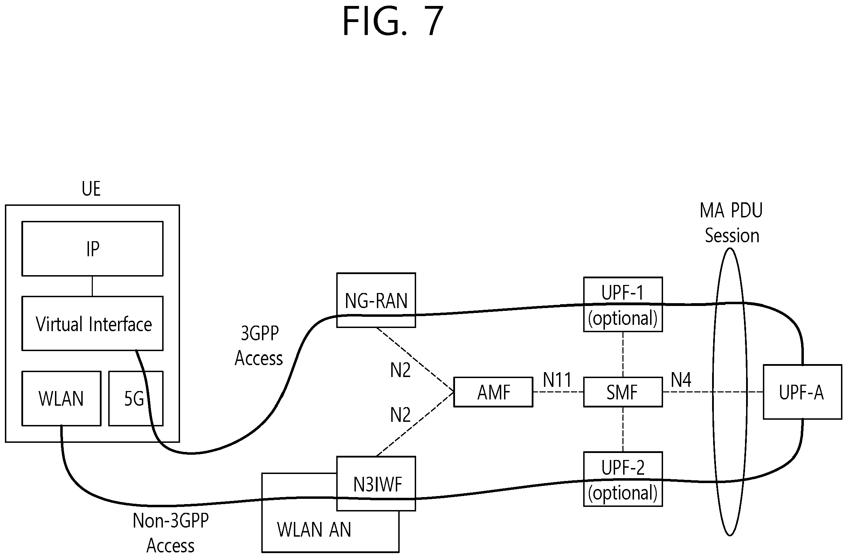

**FIG. 7** **shows an example in which a MA PDU session is generated.**

In FIG. 7, the MA PDU session is one PDU session and has a separate session tunnel for each access. One is established on 3GPP access, and the other PDU session is established on untrusted non-3GPP access (e.g., WLAN AN).

Since the MA PDU session is one session, the MA PDU session has the following characteristics.
(i) one DNN;
(ii) one UPF Anchor (UPF-A);
(iii) one PDU type (e.g., IPv6);
(iv) one session IP address
(v) one SSC mode
(vi) one HPLMN S-NSSAI.

The MA PDU session enables a multipath data link between the UE and UPF-A. This can be implemented below the IP layer.

A MA PDU session may be established through one of the following procedures.
(i) It can be established through two separate PDU session establishment procedures. This is called individual establishment.
(ii) It may be established through one MA PDU session establishment procedure. That is, the MA PDU session is simultaneously established in two accesses with one session establishment request. This is called binding establishment.

After the MA PDU session is established, Session Management (SM) signaling related to the MA PDU session may be transmitted and received through random access.

### A. Individual establishment of MA PDU session

A MA PDU session may be established through two separate PDU session establishment procedures. For example, the UE may establish a MA PDU session on 3GPP access, and then perform a PDU session establishment procedure on non-3GPP access in order to add non-3GPP access to the MA PDU session created on 3GPP access. The request type in the establishment request message for adding the second access may be set to "MA PDU Request".

### B. Binding establishment.

A MA PDU session may be simultaneously established for 3GPP access and non-3GPP access through one procedure. Such one procedure may be referred to as a MA PDU session establishment procedure by UE request. The above procedure may be useful when the UE intends to establish a MA PDU session while the UE is already registered with SGC through two accesses. Instead of performing two separate PDU session establishment procedures, the UE may establish a MA PDU session by performing one MA PDU session establishment procedure.

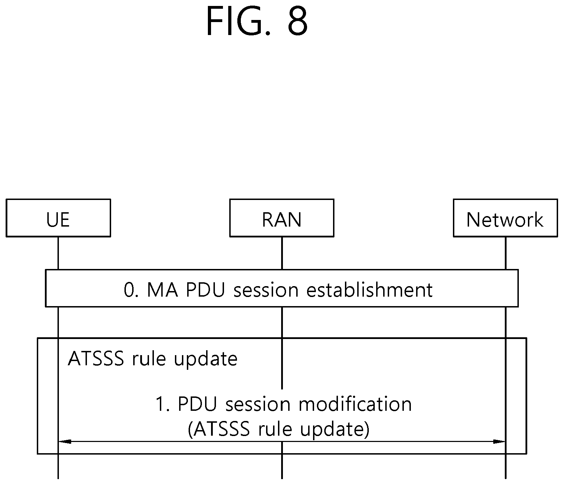

**FIG. 8** **shows an example of applying the ATSSS rule to the MA PDU session.**

Referring to FIG. 8 , if the SMF wants to move an IP flow transmitted to non-3GPP access to 3GPP access in a state in which a multi-access (MA) PDU session is established, through 3GPP access, updated ATSSS (Access Traffic Steering, Switching and Splitting) rules can be transmitted.

### <Access Traffic Steering, Switching & Splitting(ATSSS)>

The ATSSS function may be an optional feature supported by the UE and the SGC network.

The ATSSS function may enable a multi-access PDU Connectivity Service. For example, the ATSSS function may exchange PDUs between the UE and the data network by using one 3GPP access network and one non-3GPP access network simultaneously, and using two independent N3/N9 tunnels between the PSA and RAN/AN. The multi-access PDU connection service may be realized by establishing a Multi-Access PDU (MA PDU) Session. The MA PDU session may be, for example, a PDU session with user-plane resources in two access networks.

If the UE is registered through 3GPP and non-3GPP access, or if the UE is registered with only one access, the UE may request a MA PDU session.

After the MA PDU session is established, if user-plane resources exist in both access networks, in order to determine how to distribute uplink traffic through the two access networks, the UE applies network-provided policies (e.g., ATSSS rules) and exchange local conditions (e.g., network interface availability, signal loss conditions, user preferences, etc.). Similarly, the UPF anchor of the MA PDU session applies the network provision policy (e.g., N4 rule) and feedback information received from the UE through the user plane (e.g., access network unavailability or availability) to determine to distribute downlink traffic to two N3 / N9 tunnel and to two access networks. If only one access network has a user plane resource, to trigger the establishment or activation of a user plane resource through the other access, the UE may apply the ATSSS rule, and may consider local conditions.

The MA PDU session type may be, for example, one of IPv4, IPv6, IPv4v6 and Ethernet. Unstructured types may not be supported in the current version.

ATSSS functionality can be supported over any type of access network. Here, all types of access networks may include untrusted non-3GPP access networks and trusted non-3GPP access networks, wireline 5G access networks, and the like. As long as the MA PDU session can be established over any type of access network, the ATSSS function can be supported over any type of access network.

Hereinafter, a function for enabling ATSSS will be described.

First, the MA PDU session will be described. MA PDU sessions can be managed using the session management function with the following additions and modifications:
1) If the UE wants to request a new MA PDU session:
   - When the UE is registered in the same PLMN through 3GPP access and non-3GPP access, the UE may transmit a PDU session establishment request message including "MA PDU Request" through one of the two accesses. The AMF may inform the SMF that the UE is registered via both accesses. The AMF notifying the SMF may trigger establishment of user-plane resources in both accesses and two N3/N9 tunnels between the PDU session anchor (PSA) and the RAN/AN.
   - When the UE is registered with different PLMNs through 3GPP access and non-3GPP access, the UE may transmit a PDU session establishment request message including "MA PDU Request" through one of the two accesses. After this PDU session is established in one N3/N9 tunnel between the PSA and (R)AN/AN, the UE may transmit a PDU session establishment request message including "MA PDU Request" and the same PDU session ID via the other access. User-plane resources in both accesses and two N3/N9 tunnels between PSA and RAN/AN may be established.
   - If the UE is registered through only one access, the UE may transmit a PDU session establishment request message including an indication of "MA PDU Request" through the access in which the UE is registered. One N3/N9 tunnel between PSA and RAN/AN and user-plane resources in this access may be established. After the UE is registered through the second access, the UE may establish user-plane resources in the second access.
   - In the PDU session establishment request message transmitted to request a new MA PDU session, the UE may provide ATSSS capability information of the UE. ATSSS capability (capabilities) information may include information about the steering mode and steering functionalities supported by the UE.
   - If the UE indicates that it can support ATSSS-LL (Low Layer) function with any steering mode, and the network accepts to activate this function, the network may provide UE Measurement Assistance Information to the UE. And, the network may provide one or more ATSSS rules to the UE.

The UE indicates that the UE can support the MPTCP function in any steering mode, and can support the ATSSS-LL function only in the Active-Standby steering mode, and the network may accept to activate these functions. In this case, the network provides MPTCP proxy information to the UE, the network may allocate one IP address/prefix for the MA PDU session and two additional IP addresses/prefixes called "link-specific multipath" to the UE. Additionally, the network may provide the UE with UE measurement assistance information and provide the UE with one or more ATSSS rules, including ATSSS rules for non-MPTCP traffic. ATSSS rules for non-MPTCP traffic can use the ATSSS-LL function and Active-Standby steering mode to indicate how non-MPTCP traffic is transmitted over 3GPP access and non-3GPP access in the uplink direction.
- If the UE indicates that it can support MPTCP functions with all steering modes and ATSSS-LL functions with all steering modes, and the network accepts to enable these functions, the network may provide MPTCP proxy information to the UE. In addition, the network may allocate one IP address/prefix for the MA PDU session and two additional IP addresses/prefix called "link-specific multipath" to the UE. The network may provide UE measurement assistance information and one or more ATSSS rules to the UE.
- If the UE requests S-NSSAI, S-NSSAI shall be allowed in both accesses. Otherwise, the MA PDU session may not be established.
- The SMF may determine ATSSS capabilities supported for the MA PDU session, based on ATSSS capabilities provided by the UE and the DNN configuration of the SMF. The SMF may perform the following actions:
   - a) if the UE includes "MPTCP functionality with any steering mode and ATSSS-LL functionality with only Active-Standby steering mode" in the ATSSS capability; and
   - a-1) If the DNN configuration allows MPTCP and ATSSS-LL for all steering modes, for the MA PDU session, (1) MPTCP and ATSSS-LL may be possible for all steering modes in downlink, (2) uplink MPTCP and ATSSS-LL may be possible in Active-Standby mode; or
   - a-2) If the DNN configuration allows MPTCP for all steering mode and allows ATSSS-LL for Active-Standby mode, for MA PDU session, MPTCP and ATSSS-LL are possible in Active-Standby mode in uplink and downlink.
   - b) If the UE includes "ATSSS-LL functionality with any steering mode" in the ATSSS capability, and the DNN settings allow ATSSS-LL with any steering mode, the MA PDU session will cover all steering modes in uplink and downlink. ATSSS-LL may be possible.
   - c) If the UE includes "MPTCP functionality with any steering mode and ATSSS-LL functionality with any steering mode" in the ATSSS capability, and the DNN configuration allow MPTCP and ATSSS-LL for all steering modes, for the MA PDU session, MPTCP and ATSSS-LL may be possible with all steering modes in uplink and downlink.

The SMF may provide the ATSSS capability of the MA PDU session to the PCF while the PDU session establishment procedure is being performed.
- Policy and charging control (PCC) rules provided by the PCF may include ATSSS control information. The PCC rule and ATSSS control information may be used by the SMF to derive the ATSSS rule for the UE and the N4 rule for the UPF. For MA PDU session, if dynamic PCC rule is not used, SMF may provide ATSSS rule and N4 rule to UE and UPF, respectively, based on local configuration (e.g., local configuration based on DNN or S-NSSAI).
- The UE may receive the ATSSS rule from the SMF. The ATSSS rule may indicate how to route uplink traffic through 3GPP access and non-3GPP access. Similarly, the UPF may receive the N4 rule from the SMF. The N4 rule may indicate how to route downlink traffic through 3GPP access and non-3GPP access.
- When the SMF receives the PDU session establishment request message including the "MA PDU Request" indication, and if UP security protection is required for the PDU session, the SMF may confirm the establishment of the MA PDU session only if UP security protection requiring 3GPP access can be enforced. The SMF need not to check whether it can enforce UP security protections that require non-3GPP access.
- 2) After the MA PDU session establishment procedure (i.e., after the MA PDU session is established), the following description may be applied:
   - at any given time, a MA PDU session may have user-plane resources in both 3GPP access and non-3GPP access, may have user-plane resources in only one access, or may not have user-plane resources in any access.
   - Even if the UE deregisters from one access, AMF, SMF, PCF and UPF can maintain their MA PDU session contexts if the UE is registered with another access
   - When the UE deregisters from one access and the UE is registered for another access, the AMF may inform the SMF that the access type for the MA PDU session has become unavailable. Thereafter, the SMF may inform the UPF that the access type of the deregistered access has become unavailable and that the N3/N9 tunnel for the corresponding access type has been released.
   - When the UE wants to add a user-plane resource in one access of the MA PDU session (e.g., based on access network performance measurement and/or ATSSS rules), the UE may transmit a PDU session establishment request message over this access. Here, the PDU session establishment request message may include a PDU session ID of the MA PDU session and an "MA PDU Request" indication. For this access, if N3/N9 do not exist, N3/N9 for this access may be established.
   - When the UE wants to re-activate a user-plane resource in one access of the MA PDU session (e.g., based on access network performance measurement and/or ATSSS rules), the UE may initiate a UE Triggered Service Request procedure through this access.

3) When the network wants to re-activate the user-plane resource through 3GPP access or non-3GPP access of the MA PDU session, the network may initiate a Network Triggered Service Request procedure.

A MA PDU session may also be established in one of the following cases:
a) when the establishment of the MA PDU session is explicitly requested by the ATSSS-capable UE; or
b) If the ATSSS-capable UE requests a single-access PDU session, but the network decides to establish the MA PDU session instead, the MA PDU session may be established. This example may correspond to an optional scenario, this example may occur when a UE that requires single access for a PDU session has requested a single-access PDU session, but when there are no a policy (e.g., UE route selection policy (URSP) rule) and local restrictions.

When the UE moves from EPS to 5GS, a MA PDU session may be established while the PDU session modification procedure is performed.

An ATSSS-capable UE may decide to request a MA PDU session based on the provided URSP rule. In particular, if the URSP rule triggers the UE to establish a new PDU session, and if the access type preference component of the URSP rule indicates "Multi-Access", the UE may request an MA PDU session when the UE applies the URSP rule.

Hereinafter, a policy for ATSSS control will be described.

While the establishment of the MA PDU session is being performed, if a dynamic PCC is used for the MA PDU session, the PCF may perform ATSSS policy determination and create a PCC rule including ATSSS policy control information. Here, the ATSS policy control information may be used to determine how uplink traffic and downlink traffic of the MA PDU session are distributed through 3GPP access and non-3GPP access.

The SMF may receive the PCC rule together with the ATSSS policy control information from the PCF. And, the SMF may map these rules to (a) the ATSSS rule transmitted to the UE and (b) the N4 rule transmitted to the UPF. The ATSSS rule may be a prioritized list of rules that the UE applies to enforce the ATSSS policy in the uplink direction. And, the N4 rule may be applied by the UPF to enforce the ATSSS policy in the downlink direction.

When a MA PDU session is created or the MA PDU session is updated by the SMF (for example, after the SMF receives an updated (or new) PCC rule from the PCF), the ATSSS rule may be transmitted to the UE along with the NAS message. Similarly, the N4 rule may be transmitted to the UPF when a MA PDU session is created or the MA PDU session is updated by the SMF.

For ATSSS, Quality of Service (QoS) may be supported. Hereinafter, QoS support (QoS support) will be described.

The 5G QoS model for single access PDU sessions can also be applied to MA PDU sessions. For example, the QoS flow may be the finest granularity of QoS differentiation in the MA PDU session. Compared to a single-access PDU session, one difference is that in the MA PDU session, there may be separate user plane tunnels between the AN and the PSA, and each user plane tunnel may be related to a specific access (either 3GPP access or non-3GPP access). However, QoS flows may not be associated with a particular access. That is, since QoS flows are access-agnostic, the same QoS can be supported when traffic is distributed through 3GPP access and non-3GPP access. SMF may provide the same QoS Flow ID (QFI) in 3GPP access and non-3GPP access, so that the same QoS is supported in both access.

Regarding ATSSS, Access Network Performance Measurements may be supported. Hereinafter, Access Network Performance Measurements will be described.

When the MA PDU session is established, the network may provide Measurement Assistance Information to the UE. The measurement assistance information can be used to determine which measurements the UE should perform in both accesses, the measurement assistance information may be used to determine whether the UE needs to send a measurement report to the network.

The measurement assistance information may include addressing information of a Performance Measurement Function (PMF) in UPF, and the UE may transmit a PMF protocol message in the manner shown in the following example:
- In the case of an IP type PDU session, measurement assistance information may include one IP address for PMF, User Datagram Protocol (UDP) port related to 3GPP access, and another UDP port related to non-3GPP access;
- In the case of an Ethernet type PDU session, measurement assistance information may include one MAC address related to 3GPP access and another MAC address related to non-3GPP access.

NOTE 1: To protect the PMF in UPF (e.g., Distributed Denial of Service (DDOS) blocking for PMF), IP address of PMF is accessible only from UE IP address through N3/N9 interface.

NOTE 2: After the MA PDU session is released, the same UE IP address/prefix for the MA PDU session may not be assigned to another UE within a short time.

PMF protocol messages such as the following examples may be exchanged between the UE and the PMF:
- Messages can be exchanged allowing Round Trip Time (RTT) measurements. For example, if a "Smallest Delay" Steering Mode is used, messages allowing RTT measurements may be exchanged.
- The UE may transmit a message for reporting access availability/unavailability to the UPF.

A PMF protocol message exchanged between the UE and the UPF may use a QoS flow related to a default QoS rule for available access(s).

The QoS flow related to the basic QoS rule for the MA PDU session may be a non-GBR QoS flow.

For PMF protocol messages, UE does not apply ATSSS rules, and UPF does not apply Multimedia-Authentication-Request (MAR) rules.

The UE requests an MA PDU session, the UE may indicate that the UE can support the MPTCP function in all steering modes and support the ATSSS-LL function only in the Active-Standby steering mode. In this case, in order for the UE to transmit an access availability / unavailability report to the UPF, the network may transmit Measurement Assistance Information for the UE to the UE. In this case, since the UE and UPF can use the measurements available in the MPTCP layer, the UE and the UPF do not perform RTT measurements using PMF.

In the following, the RTT measurement is described.

RTT measurement can be performed independently by the UE and UPF. There may be no measurement reports from one side to the other. RTT measurements can be defined to support the " Smallest Delay" Steering Mode.

RTT measurement by UE and UPF may be based on the following mechanism:
1. The PMF of the UE transmits the PMF-Echo Request message to the PMF of the UPF through the user plane, the PMF of the UPF may respond with a PMF-Echo Response message for each. Similarly, the PMF of the UPF transmits the PMF-Echo Request message to the PMF of the UE through the user plane, the PMF of the UE may respond with a PMF-Echo Response message for each.
2. In the case of an IP type MA PDU session, the following may be applied:
   - The PMF in the UE sends PMF messages to the PMF in the UPF over UDP/IP. The destination IP address is the IP address contained in the Measurement Assistance Information and the destination UDP port is one of the two UDP ports contained in the Measurement Assistance Information. One UDP port is used for sending PMF messages to UPF over 3GPP access and the other UDP port is used for sending PMF messages to UPF over non-3GPP access. The source IP address is the IP address assigned to UE for the MA PDU Session and the source UDP port is a UDP port that is dynamically allocated by the UE for PMF communication. This source UDP port in the UE remains the same for the entire lifetime of the MA PDU Session.
   - The PMF in the UPF sends PMF messages to the PMF in the UE over UDP/IP. The source IP address is the same IP address as the one provided in the Measurement Assistance Information and the source UDP port is one of the two UDP ports as provided in the Measurement Assistance Information. One UDP port is used for sending PMF messages to UE over 3GPP access and the other UDP port is used for sending PMF messages to UE over the non-3GPP access. The destination IPv4 address is the IPv4 address assigned to UE for the MA PDU Session (if any) and the destination IPv6 address is an IPv6 address selected by the UE from the IPv6 prefix assigned for the MA PDU Session (if any). The destination UDP port is the dynamically allocated UDP port in the UE, which is contained in all PMF messages received from the UE. If the UE receives Measurement Assistance Information, the UE shall inform the network via the user plane about the UE's dynamically allocated UDP port, and the IPv6 address if IPv6 is used for PMF messages, so that it is possible for the UPF to know the UE's IPv6 address (if applicable) and dynamically allocated UDP port as soon as the MA PDU Session has been established.
3. In the case of a MA PDU Session of Ethernet type, the following may be applied:
   - The PMF in the UE sends PMF messages to the PMF in the UPF over Ethernet. The Ethertype is the Ethertype contained in the Measurement Assistance Information and the destination MAC address is one of the two MAC addresses contained in the Measurement Assistance Information. One MAC address is used for sending PMF messages to UPF over 3GPP access and the other MAC address is used for sending PMF messages to UPF over non-3GPP access. The source MAC address is a MAC address of the UE, which remains the same for the entire lifetime of the MA PDU Session.
   - The PMF in the UPF sends PMF messages to the PMF in the UE over Ethernet. The Ethertype is the same Ethertype as the one provided in the Measurement Assistance Information and the source MAC address is one of the two MAC addresses as provided in the Measurement Assistance Information. One MAC address is used for sending PMF messages to UE over 3GPP access and the other MAC address is used for sending PMF messages to UE over non-3GPP access. The destination MAC address is the MAC address of the UE, which is contained in all PMF messages received from the UE. If the UE receives Measurement Assistance Information, the UE shall inform the network via the user plane about the UE's MAC address so that it is possible for the UPF to know the UE's MAC address as soon as the MA PDU Session has been established.
4. When the UP connection of the MA PDU session is deactivated on an access, no PMF-Echo Request messages are sent on this access. The PMF in the UPF shall not send PMF-Echo Request on this access if the UP connection is not available or after it receives notification from the (H-)SMF to stop sending the PMF-Echo Request on this access.
5. The UE and the UPF derive an estimation of the average RTT over an access type by averaging the RTT measurements obtained over this access.

In ATSSS, the Steering function may be supported. Hereinafter, the Steering function will be described.

The functionality of ATSSS-capable UE (ATSSS-capable UE) that ATSSS-capable UE (ATSSS-capable UE) can steer (coordinate), switch, and split the traffic of the MA PDU session through 3GPP access and non-3GPP access can be referred to as "steering functionality". An ATSSS capable UE may support one or more of the following types of steering functions:
1) A high-layer steering function that operates above the Internet Protocol (IP) layer may be supported. For example, a high-layer steering function "MPTCP functionality" applying a Multipath Transmission Control Protocol (MPTCP) protocol may be supported. Here, this steering function ("MPTCP functionality") can be applied to steer, switch, and split TCP traffic of applications that are allowed to use MPTCP. The MPTCP function of the UE may communicate with the associated MPTCP Proxy function of the UPF via the 3GPP user plane and/or the non-3GPP user plane.
2) A low-layer steering function that operates below the IP layer may be supported. For example, a low-layer steering function called "ATSSS Low-Layer functionality" or ATSSS-LL functionality may be supported. Here, this steering function ("ATSSS Low-Layer functionality" or ATSSS-LL functionality) can be applied to steer, switch, and split any type of traffic (including TCP traffic, User Datagram Protocol (UDP) traffic, Ethernet traffic, etc.). ATSSS-LL functionality must be supported in an Ethernet-type MA PDU session. In the network, one UPF supporting ATSSS-LL must exist in the data path of the MA PDU session.

The UE may indicate to the network the steering function and steering mode supported by the UE by including one of the following in the UE ATSSS Capability:
1) ATSSS-LL functionality with any steering mode. In this case, the UE may indicate that it can steer, switch and split all traffic of the MA PDU session using the ATSSS-LL function with all steering modes.
2) MPTCP functionality with any steering mode and ATSSS-LL functionality with only Active-Standby steering mode. In this case, ATSSS-LL function with only MPTCP function and Active-Standby steering mode with all steering modes can be supported. In this case, the UE may indicate:
   2-a) The UE may use the MPTCP function with all steering modes to steer, switch and split the MPTCP traffic of the MA PDU session.
   2-b) The UE may use the ATSSS-LL function with active-standby steering mode to steer, switch and split all other traffic (e.g., non-MPTCP traffic) of the MA PDU session.
3) MPTCP functionality with any steering mode and ATSSS-LL functionality with any steering mode. In this case, the MPTCP function with all steering modes and the ATSSS-LL function with all steering modes may be supported. In this case, the UE may indicate:
   3-a) The UE may use the MPTCP function with all steering modes to steer, switch and split the MPTCP traffic of the MA PDU session.
   3-b) The UE can use the ATSSS-LL function with any steering mode to steer, switch and split all other traffic (i.e. non-MPTCP traffic) in the MA PDU session.

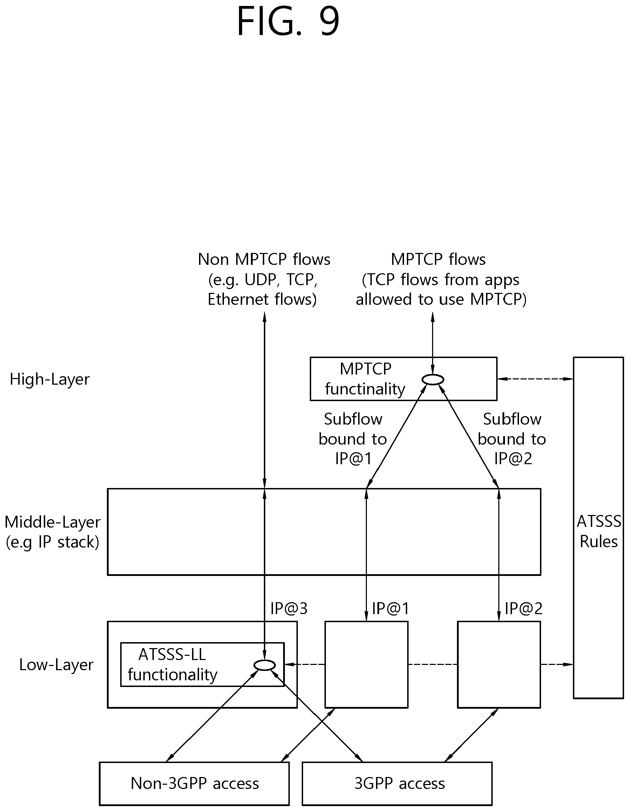

The steering function described above is schematically illustrated in FIG. 9, which shows an exemplary model for an ATSSS-capable UE supporting the MPTCP function and the ATSSS-LL function.

**FIG. 9** **is a diagram illustrating an example of a steering function of a UE.**

In the example of FIG. 9, MPTCP flow may indicate traffic of an application to which MPTCP can be applied. In the figure, three different IP addresses (e.g., IP@1, IP@2, IP@3) are shown in the UE.

The "Low-Layer" in this figure may contain functions operating below the IP layer (e.g., other network interfaces of the UE), and the "High-Layer" may contain functions operating above the IP layer.

Within the same MA PDU session of the UE, the MPTCP function may be used to steer the MPTCP flow, and at the same time, the ATSSS-LL function may be used to steer all other flows. For the same packet flow, one steering function can be used.

All steering functions of the UE may use the same set of ATSSS rules to perform ATSSS decisions (e.g., how to steer, switch, split traffic). Similarly, all ATSSS decisions in UPF can be performed by applying the same set of N4 rules supporting ATSSS. The ATSSS rule and the N4 rule supporting ATSSS may be provided to each of the UE and the UPF when the MA PDU session is established.

When the UE supports both MPTCP functionality and ATSSS-LL functionality, the UE may determine a steering function to be applied to a specific packet flow by using the provided ATSSS rule.

Hereinafter, the ATSSS rule will be described in detail.

After the MA PDU session is established, the UE may receive a priority list of ATSSS rules from the SMF. An example of the structure of the ATSSS rule is shown in Table 3 below.

**[Table 3]**

| Information name | Description | Category | SMF permitted to modify in a PDU context | Scope |
|---|---|---|---|---|
| Rule Precedence | Determines the order in which the ATSSS rule is evaluated in the UE | Mandatory (NOTE 1) | Yes | PDU context |
| Traffic Descriptor | This part defines the traffic descriptor component of the ATSSS rule. | Mandatory (NOTE 2) | | |
| Application descriptors | Includes one or more application IDs that identify the application generating the traffic (NOTE 3). | Optional | Yes | PDU context |
| IP descriptors (NOTE 4) | One or more 5-tuples that identify the destination of IP traffic. | Optional | Yes | PDU context |
| Non-IP descriptors (NOTE 4) | Includes one or more descriptors to identify the destination of non-IP traffic, such as Ethernet traffic. | Optional | Yes | PDU context |
| Access Selection Descriptor | This part defines the Access Selection Descriptor components for the ATSSS rule. | Mandatory | | |
| Steering Mode | Identifies the steering mode that may be applied for the matching traffic. | Mandatory | Yes | PDU context |
| Steering Functionality | Identifies whether the MPTCP functionality or the ATSSS-LL functionality should be applied for the matching traffic. | Optional (NOTE 5) | Yes | PDU context |

In Table 3 above, NOTE1 to NOTES are as follows:
NOTE 1: Each ATSSS rule may have a different precedence value from the other ATSSS rules.
NOTE 2: There may be more than one traffic descriptor component.
NOTE 3: Application ID may include OSId(Operating System Id) and an OSAppId(Operating System Application Id).
NOTE 4: An ATSSS rule cannot contain both IP descriptors and Non-IP descriptors.
NOTE 5: If the UE supports only one Steering Functionality, this component is omitted.

The UE may evaluate the ATSSS rules according to priority order.

Each ATSSS rule may include a traffic descriptor (e.g., including one or more components described in the example in Table 3) that may determine when the rule is applicable. When all components of the traffic descriptor match the considered service data flow (SDF), the ATSSS rule may be determined to be applicable.

Depending on the type of MA PDU session, the traffic descriptor may include components such as the following examples:
- When the type of the MA PDU session is IPv4, IPv6, or IPv4v6 type: The traffic descriptor may include an application descriptor and/or an IP descriptor.
- When the type of MA PDU session is Ethernet type: The traffic descriptor may include an application descriptor and/or a non-IP descriptor.

One ATSSS rule may be provided to the UE with a "match all" traffic descriptor that matches all SDFs. If this ATSSS rule is provided, this ATSSS rule may have the lowest Rule Precedence value. This ATSSS rule may be evaluated last by the UE.

Each ATSSS rule may include an access selection descriptor that includes components such as the following examples:
- ATSSS rules may include Steering Mode. Steering Mode may determine how the matched SDF should be distributed over 3GPP access and non-3GPP access. Steering Modes such as the following examples may be supported:
   - 1) Active-Standby: Active-Standby can be used to steer the SDF in one access (Active access) (if this access is available). And, when active access is unavailable, Active-Standby can be used to switch the SDF to another available access (Standby access). When active access becomes available again, the SDF can be switched back to active access. If standby access is not defined, SDF is allowed only for active access and cannot be transmitted to other accesses.
   - 2) Smallest Delay: Smallest Delay can be used to steer the SDF to the access determined to have the smallest Round-Trip Time (RTT). Measurements may be performed by the UE and UPF to determine RTT over 3GPP access and non-3GPP access. Also, if one access becomes unavailable, SDF traffic can be switched to another available access, if allowed by PCC rules.
   - 3) Load-Balancing: Load-Balancing can be used to split the SDF through both accesses when both accesses are available. Load-Balancing may include a percentage of SDF traffic transmitted through 3GPP access and non-3GPP access. Load-balancing can only be applied to non-GBR (Guaranteed Bit Rate) QoS flows. Also, if one access becomes unavailable, all SDF traffic may be switched to another available access, as if the percentage of SDF traffic over the other available access is 100%.
   - 4) Priority-based: Priority-based can be used to steer the traffic of SDF with high priority access. Priority-based can be used to steer the traffic of the SDF to high priority access until it is determined that the high priority access is congested. When it is determined that the high-priority access is congested, the traffic of the SDF may be transmitted even with the low-priority access. That is, SDF traffic may be split through two accesses. Also, if high priority access becomes unavailable, all SDF traffic may be switched through low priority access. How the UE and the UPF determine when congestion occurs in access may vary by implementation.
- ATSSS rules may include Steering Functionality. Steering Functionality can be used to identify whether the MPTCP function or the ATSSS-LL function can be used to steer the traffic of the matching SDF. Steering Functionality can be used when the UE supports multiple functions for ATSSS.

Note that it is not necessary to update the ATSSS rules when one access becomes available or becomes unavailable.

An example of an ATSSS rule that may be provided to a UE is described as follows:
a) ATSSS rules may include "Traffic Descriptor: UDP, DestAddr 1.2.3.4" and "Steering Mode: Active-Standby, Active=3GPP, Standby=non-3GPP":
   - This ATSSS rule may mean "steers UDP traffic having a destination IP address 1.2.3.4 to active access (3GPP access) when active access (3GPP access) is available. If active access is unavailable, use standby access (non-3GPP access)".
b) ATSSS rules may include "Traffic Descriptor: TCP, DestPort 8080", and "Steering Mode: Smallest Delay":
   - This ATSSS rule may mean "steer TCP traffic with destination port 8080 to the access with the Smallest Delay". The UE may measure the RTT over both accesses to determine the access with the Smallest Delay.
c) ATSSS rules may include "Traffic Descriptor: Application-1" Steering Mode: Load-Balancing, 3GPP=20%, non-3GPP=80%", and "Steering Functionality: MPTCP":
   - This ATSSS rule may mean "Using the MPTCP function, transmit 20% of application-1's traffic over 3GPP access, and transmit 80% of application-1's traffic over non-3GPP access".

### II. Techniques and Procedures Related to the Disclosure of The Present Specification

Techniques and procedures related to the disclosure herein are described below. In addition, examples of problems to be solved in the disclosure of the present specification may also be described below.

For ATSSS, various steering modes (e.g., Active-Standby, Smallest Delay, Load-Balancing, Priority-based, etc.) have been defined. In addition to the Steering Mode previously defined for ATSSS, in addition, the issue of which steering mode can be supported is discussed as follows.

An example of an issue related to the additional steering mode is as follows.

It is necessary to discuss whether to support additional steering modes and how to support additional steering modes. For issues related to additional steering modes, the following examples can be discussed:
- identify gaps with steering modes;
- identify whether and how new steering mode(s) can improve the network service delivered to UE and 5G RG, and determine if additional steering mode(s) can be defined
- whether and how to negotiate the support of additional steering mode(s) between the UE and the network and potentially between NF (e.g., between SMF and UPF);
- whether and how to enhance PCC rules, ATSSS rules and N4 rules to support these additional steering mode(s);
- whether and how to enhance PMF to support these additional steering mode(s), and what the impact to the UE and the network would be.

For examples of issues related to additional steering modes, the following discussions were suggested.

Hereinafter, an example of a new steering mode (autonomous steering mode with advanced PMF) will be described.

To support this new steering mode, the previously defined link performance measurement function (PMF) must be improved. A conventional PMF may support RTT measurement and access availability report per PDU session. Regarding RTT measurement, a default QoS flow may be used to transmit measurement traffic. In addition, the RTT value detected (or detected) in this QoS flow may be processed as an RTT for this PDU session through this access. Clearly, this RTT value cannot reflect the exact RTT for all traffic of this PDU session over this access. For some service traffic that is sensitive to latency, RTT measurement for each QoS flow is required. In addition, since measurements of loss ratio and jitter are also important in determining link performance, except for RTT, better traffic steering/switching/splitting may be possible. At the same time, some thresholds corresponding to these parameters, such as maximum RTT, maximum UL/DL Packet Loss Rate and jitter, may be transmitted to UE and UPF to trigger traffic steering/switching/splitting, similar to RAN assistance information (e.g., RAN assistance information defined for 3GPP access supporting RAN for handover threshold determination)

Various characteristics can be described, such as the following examples:
- RTT measurement for each QoS flow
- Packet Loss Rate measurement for each QoS flow
- Jitter measurement for each QoS flow
- Thresholds for traffic steering/switching/splitting;

These features can be selected independently.

Improvements in link performance measurement are described.

RTT measurement per QoS flow:
When an MA PDU Session is established, the network may provide the UE with Measurement Assistance Information.

The RTT measurement per QoS flow may be triggered by UE or the UPF independently. The Measurement Assistance Information contains the QFI(s) for which the RTT measurement is to be applied. Optionally, the RTT measurement frequency can also be decided by the network side and sent to UE if available via Measurement Assistance Information.

For RTT measurement per QoS flow, a mechanism such as the following example may be used.

In the case of an IP type MA PDU session, the following may be applied:
- The PMF in the UE sends PMF messages via one QoS flow to the PMF in the UPF over UDP/IP. The destination IP address and UDP port are as defined conventionally. i.e., the destination IP address is the PMF IP address, and the UDP port number corresponds to the access via which this message is sent. When the message is received by the UPF, the UPF can identify the PMF message based on the destination IP address.
- The PMF in the UPF sends PMF messages to the PMF in the UE over UDP/IP. The source IP address is the same IP address as the one provided in the Measurement Assistance Information and the source UDP port is one of the two UDP ports as provided in the Measurement Assistance Information as defined conventionally. The destination IP address is the MA PDU session IP address allocated by the UE, and the UDP port is also sent by the UE via user plane after the MA PDU session establishment. When the message is received by the UE, the UE can identify the PMF message based on the source IP address of the PMF.

In the case of an Ethernet type MA PDU session, the following may apply:
- The PMF in the UE sends PMF messages to the PMF in the UPF over Ethernet. The destination MAC address is included in the Measurement Assistance Information. Then the UPF can identify the PMF message based on the destination MAC address.
- The PMF in the UPF sends PMF messages to the PMF in the UE over Ethernet. The source MAC address and destination MAC address are as defined conventionally. Then the UE can identify the PMF message based on the source MAC address.

The UE and the UPF derive an estimation of the average RTT over an access type by averaging the RTT measurements obtained over this access.

The following drawings are made to explain a specific example of the present specification. Since the names of specific devices or names of specific signals/messages/fields described in the drawings are provided as examples, the technical features of the present specification are not limited to the specific names used in the drawings below.

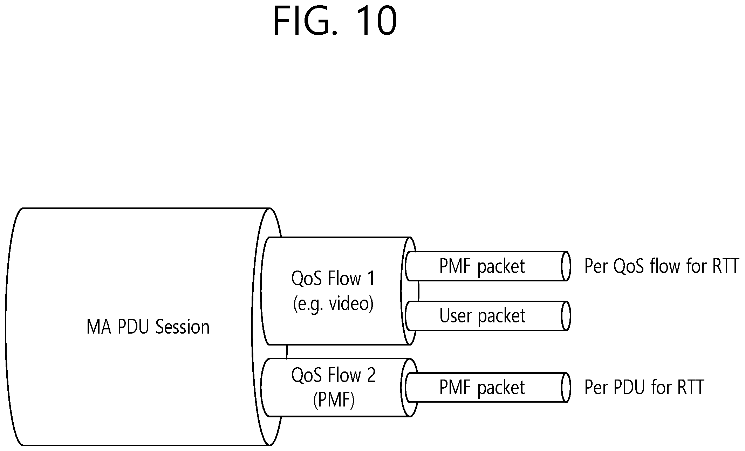

**FIG. 10** **shows examples of conventional RTT measurement and improved RTT measurement.**

Referring to FIG. 10, "Per PDU for RTT" written in the lower part represents an example of RTT measurement according to the conventional method. The "Per QoS flow for RTT" written above represents an example of an enhanced RTT measurement.

It is not suggested to perform the RTT measurement for GBR QoS flow, considering the QoS parameters for GBR traffic are guaranteed, and the GBR traffic is only transported via one access resulting in no comparing with the other path RTT value.

Comparing with the RTT measurement per PDU session as defined conventionally, enhanced RTT measurement (e.g., Per QoS flow for RTT in FIG. 10) makes the RTT measurement more accurate. Because even for the non-GBR QoS flow, different QoS flow corresponding to the different 5QI has the different packet delay budget requirement (e.g., see TS 23.501 Table 5.7.4-1). For example, when the 5QI=5, the packet delay budget is 100ms, but if the 5QI=6, the packet delay budget is equal to 300 ms, three times than 5QI=5. Therefore, it is incorrect to use one non-GBR QoS flow RTT representing all the other non-GBR QoS flows.
1) Packet loss ratio measurement per QoS flow. For reference, the same mechanism as described in TR 23.793 V16.0.0 section 6.3.1.4 can be applied to packet loss ratio measurement.

UE and UPF exchange the packet counting information in certain period to calculate the packet loss ratio during the path performance measurement procedure.
- The UE calculates the number of UL packets transmitted through one QoS flow between the time when one PMF request message is transmitted and the time when the previous PMF request message is transmitted, and provides results to the UPF through this PMF request message.
- In addition, the UPF may also calculate the number of UL packets received through one QoS flow between the time when one PMF request message is received and the time when the previous PMF request message is received. The UPF may calculate a UL packet loss ratio based on the local counting result and the number of UL packets transmitted by the UE.
- The UPF may send the result of the UL packet loss ratio to the UE through a PMF response message. When UPF measures the DL packet loss rate between the time when one PMF response message is transmitted and the time when the previous PMF response message is transmitted, the UPF can also include information counting the number of DL packets in the same message.
- UE counts the number of received DL between one PMF response message and the previous PMF response message. The UE calculates the DL packet loss ratio based on the local counting result and the number of DL packets send by UPF, and sends the DL packet loss ratio to the UPF via the subsequent PMF message.

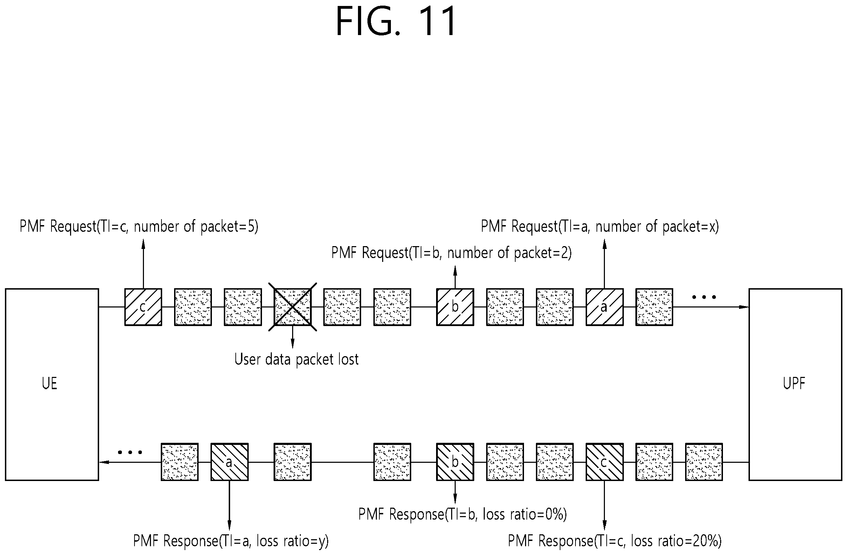

The PMF message applied to calculate the packet loss ratio is the same as the PMF message used to measure the RTT. Adding the number of packets and/or packet loss rate IE(s) to the PMF message used to measure the RTT, this PMF message can be applied to calculate the packet loss rate. Taking the UE initiated UL packet loss ratio measurement as an example, the PMF request messages from UE and the corresponding PMF response messages (Transaction ID is used to identify the request/response message) from UPF are applied to transport the number of packet and loss ratio, see the following FIG. 11.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 11** **shows an example of packet loss ratio measurement.**

Referring to the example of FIG. 11, an example of measuring a packet loss ratio for UL traffic is shown.

The PMF request message transmitted by the UE may include TI (Transaction ID) information and the number of packets transmitted by the UE(e.g., the number of UL packets between the time one PMF request message is sent and the time the previous PMF request message is sent). TI information may be used to distinguish PMF messages. For example, TI information may be extended procedure transaction identity (EPTI). For example, if the UE sets the EPTI included in the PMF request message to 1 and transmits it, the UPF may transmit by setting the EPTI included in the response message to the PMF request message to 1. For example, based on the EPTI included in the PMF message (e.g., request message, response message, etc.), the UE can know the response message to which PMF request message the corresponding PMF message is. Whenever a PMF request message is transmitted, the value of EPTI may be increased. For reference, procedure transaction identity (PTI) may also be used for message transmission based on the NAS layer. EPTI was defined because transmission of PMF messages occurs more frequently than transmission of messages based on the NAS layer.

Upon receiving the PMF request message from the UE, the UF may calculate the number of UL packets. For example, the UPF may also calculate the number of UL packets received through one QoS flow between the time when one PMF request message is received and the time when the previous PMF request message is received. In addition, the UPF may calculate the UL packet loss rate based on the local counting result (e.g., the number of UL packets calculated by the UPF) and the number of UL packets transmitted by the UE. The PMF response message transmitted by the UPF may include TI information and information about a UL packet loss ratio.

As described above, according to the discussion (e.g., solution) of the new steering mode, for 5GS, the following may be affected. The above solution can affect the following entities in 5GS:
- SMF may support selection of a UPF supporting a new steering mode.
- PCF can support granting a new Steering Mode for Service Data Flow (SDF).
- UPF can support new steering mode and enhancement of PMF.
- UE can support new Steering Mode and enhancement of PMF.
- 5G-AN / NG RAN may not be affected.

As described above, in the prior art, a method of performing access measurement for multiple QoS flows using PMF has been discussed. Specifically, a method of performing measurement for each of all QoS flows of multiple QoS flows was discussed.

Meanwhile, in 5GS, several QoS flows may be mapped to one radio bearer in an access network. For reference, in the present specification, a radio bearer may be interpreted as a radio bearer of 3GPP access as well as Internet Key Exchange (IKE) tunneling (Child security association (SA)) in non-3GPP access.

When multiple QoS flows are managed by one radio bearer in the access network, if the UE and/or UPF performs access measurement for each QoS flow, user plane signaling and processing only increase, but there is no benefit. This is because measurement of each of several QoS flows mapped to one radio bearer yields similar results.

In other words, in order to efficiently use multiple QoS flows, multiple QoS flows may be measured. However, conventionally, a method for efficiently measuring multiple QoS flows has not been discussed. For example, multiple QoS flows may be mapped to one radio resource (e.g., radio bearer). In this case, according to the prior art, measurement is performed for each QoS flow included in multiple QoS flows, which causes a problem in that radio resources and computing resources are wasted. In addition, when Packet Loss Ratio (PLR) measurement is performed for multiple QoS flows, there is a problem in that many resources are wasted.

For example, measurement of multiple QoS flows can be performed in an MA PDU session. However, when multiple QoS flows are mapped to one radio resource (e.g., radio bearer), measurement of each QoS flow can have almost the same result because radio has the most influence on QoS flow. In this case, radio/computing resources for measurement may be wasted.

PLR measurement can be performed for multiple QoS flows. In this case, it is necessary to check how many packets are transmitted based on the actually transmitted data. To this end, the UE and the UPF may continuously count transmitted packets. If such a task is performed for each of multiple QoS flows, many resources may be required.

Therefore, a method to solve these problems is required.

### III. Disclosure of the present specification

Disclosures described later in the present specification may be implemented in one or more combinations (e.g., a combination including at least one of the contents described below). Each of the drawings represents an embodiment of each disclosure, but the embodiments of the drawings may be implemented in combination with each other.

Description of the method proposed in the disclosure of the present specification may be composed of a combination of one or more operations/configurations/steps described below. The following methods described below may be performed or used in combination or complementary.

In the disclosure of the present specification, the following methods are proposed to solve the various problems described above. The methods below may be performed or used in combination or complementary.

Hereinafter, the disclosure of the present specification will be described with reference to the first to eighth examples of the disclosure of the present specification. The first to eighth examples of the disclosure of the present specification described below may be implemented in combination.

### 1. First example of the disclosure of the present specification

The first example of the disclosure of the present specification describes an example of a method in which an SMF requests an access network (AN) to allocate a separate radio bearer for each QoS flow.

According to the first example of the disclosure of the present specification, the SMF may inform the access network (AN) of information not to map to one radio bearer for QoS flows requiring access measurement per QoS flow. For example, the SMF may identify QoS flows requiring access measurement per QoS flow. In addition, the SMF may transmit information to the AN not to map these QoS flows to one radio bearer. Accordingly, the AN may map these QoS flows to a plurality of radio bearers without mapping them to one radio bearer.

That is, when the SMF performs procedures related to AN and radio resource setup (e.g., PDU Session Establishment process, PDU Session Activation process, PDU Session Modification process, etc.), while SMF transmits N2 information to AN, the SMF may inform whether or not it is sufficient to generate only one radio bearer by bundling the QoS flow with other QoS flows in the radio. This may inform whether each QoS flow is available or whether all QoS flows are available for each PDU Session. For example, while transmitting N2 information to the AN, the SMF may inform the AN of whether or not it is okay to create only one radio bearer along with another QoS flow for a specific QoS flow. The SMF informs whether it is okay to create one radio bearer by combining each QoS flow with another QoS flow, the SMF may inform whether it is okay to create one radio bearer by tying all QoS flows for each PDU session with other QoS flows.

Based on this information, AN only when SMF allows mapping of multiple QoS flows to one radio bearer, AN can map multiple QoS flows to one radio bearer. Conversely, if the SMF does not allow this, the AN may create a radio bearer 1:1 (e.g., 1 radio bearer per 1 QoS flow).

The radio bearer generation related information provided by the SMF to the AN may include information on whether access measurement is performed for QoS flow(s). Alternatively, information on whether access measurement is performed for QoS flow(s) may be provided together with the radio bearer generation related information.

### 2. Second example of the disclosure of the present specification

In the second example of the disclosure of the present specification, an example of a method in which a UE does not perform a measurement report for QoS flows mapped to one radio bearer, when several QoS flows are mapped to one radio bearer will be described.

For example, the second example of the disclosure of the present specification describes a method in which a UE does not perform a measurement report for QoS flows grouped together, when multiple QoS flows are mapped to one radio bearer through RRC signaling.

For example, the terminal can check whether QoS flows are mapped to one radio bearer. For example, based on the configuration information for the measurement obtained from the SMF, the terminal may check whether QoS flows that need to perform per QoS flow measurement in the current AN are mapped to one radio bearer. The terminal may receive mapping information between the QoS flow and the radio bearer through access network signaling (e.g., RRC signaling, IKE signaling). Therefore, the terminal may determine whether a QoS flow requiring per QoS flow measurement is mapped to one radio bearer.

Hereinafter, a first example and a second example of the second example of the disclosure of the present specification, which are specific examples of the second example of the disclosure of the present specification, will be described.

### 2-1. A first example of a second example of the disclosure of the present specification

A first example of the second example of the disclosure of the present specification will be described.

When QoS flows are mapped to one radio bearer, the UE may inform the network of this. At this time, the UE may inform which QoS flows are mapped to one radio bearer. Alternatively, the UE may inform the network of mapping information itself between the QoS flow and the radio bearer. The UE may inform the UPF and/or SMF of information related to mapping(e.g., information on which QoS flows are mapped to one radio bearer or mapping information between QoS flows and radio bearers, etc.). For example, the terminal may use a newly defined PMF message to inform it(e.g., information about which QoS flows are mapped to one radio bearer or information related to mapping such as mapping information between QoS flows and radio bearers) as UPF through the user plane or as SMF through NAS signaling. If the UE notifies the SMF using NAS signaling, the SMF may inform the UPF again. When the UE uses a new PMF message through the user plane, the UPF may inform the corresponding information through the SMF.

Based on this information, UPF can perform measurement for only one of several QoS flows tied to one radio bearer. Alternatively, the UE may request the UPF to perform measurement for a specific QoS flow. The SMF may update the measurement configuration based on information received from the UE or UPF. That is, the SMF can perform measurement for only one of the QoS flows mapped to one radio bearer.

As explained above, performing measurement for only one QoS flow may mean that the measurement performed for this QoS flow is also applied to other QoS flows that share a radio bearer (eg Data Radio Bearer (DRB)). For example, the UE and/or UPF may perform measurement for only one QoS flow. In addition, the UE and/or UPF may equally apply the performed measurement to other QoS flows sharing a radio bearer (eg DRB).

For example, initially, even the SMF instructed the UE to perform access measurement for QFI=1, QFI=2, and QFI=3, respectively, all three QoS flows may be mapped to one DRB. In this case, the SMF receives this information (e.g., information that all three QoS flows are mapped to one DRB) from the UE. In order for the terminal to perform access measurement only for QFI = 1, the SMF may update (eg update measurement configuration) and provide this (eg measurement configuration) to the terminal.

As another example, even though the SMF initially instructed the terminal to perform access measurement for QFI = 1, QFI = 2, and QFI = 3, among them, QFI=2 and QFI=3 may be mapped to one DRB. In this case, the SMF receives such information (e.g., information that QFI=2 and QFI=3 are mapped to one DRB) from the UE, so that the terminal performs access measurement only for QFI = 2 among QFI = 2 and QFI = 3, the SMF may update (eg update measurement configuration) and provide this (eg measurement configuration) to the terminal. In the case of QFI = 1 mapped to a separate DRB, while the update is being performed, the SMF may explicitly or implicitly inform the UE that access measurement is to be performed.

In the first example of the second example of the disclosure of the present specification, an operation of mapping a QoS flow to a radio bearer in an AN may be performed differently for each base station and according to resource conditions of each base station. Therefore, whenever a procedure such as handover / idle to connected transition / PDU session activation occurs, the terminal can check the changed mapping information again and notify it to the network. In addition, when UPF performs measurement in Idle mode or PDU Session deactivation state, since the measurement packet itself causes PDU Session activation or transition to connected mode, mapping information may be updated later. For example, a measurement packet may be generated when the UE is in an IDLE mode or when a PDU session used by the UE is in an inactive state. In this case, since the terminal updates the mapping information after the terminal enters the connected mode or after the PDU session used by the terminal is activated, the mapping information may be updated later.

### 2-2. A second example of a second example of the disclosure of the present specification

A second example of the second example of the disclosure of the present specification will be described.

When QoS flows are mapped to one radio bearer, the terminal may update the measurement configuration provided by the SMF and inform the SMF of the updated measurement configuration. The SMF can also notify UPF of this updated measurement configuration.

For example, the SMF may have instructed the UE to perform access measurement for QFI=1, QFI=2, and QFI=3, respectively. In this case, if all three QoS flows are mapped to one DRB, the terminal may update measurement configuration to perform access measurement only for QFI=1 and provide it to SMF.

As another example, the SMF may instruct the UE to perform access measurement for QFI=1, QFI=2, and QFI=3, respectively. In this case, if QFI=2 and QFI=3 are mapped to one DRB, the UE may update the measurement configuration to perform access measurement only for QFI=2 among QFI=2 and QFI=3 and provide it to the SMF.

In the second example of the second example of the disclosure of the present specification, the operation of mapping the QoS flow to the radio bearer in the AN may be performed differently for each base station and according to resource conditions of each base station. Therefore, whenever a procedure such as handover / idle to connected transition / PDU Session activation occurs, the terminal checks the changed mapping information again, accordingly, the terminal may update the configuration for access measurement and notifies it to the network. Also, when measurement is performed in UPF in Idle mode or PDU Session deactivation state, because the measurement packet itself causes PDU Session activation or connected mode transition, the configuration for access measurement can be updated later.

### 3. Third example of the disclosure of the present specification

A third example of the disclosure of the present specification describes an example of a method in which an Access Network (AN) informs an SMF of mapping information between a QoS flow and a radio bearer.

According to the third example of the disclosure of the present specification, the AN may inform the SMF of mapping information between the QoS flow and the radio bearer. For example, when the SMF performs procedures related to AN and radio resource setup (e.g., PDU Session Establishment process, PDU Session Activation process, PDU Session Modification process, etc.), the SMF may transmit N2 information to AN. Then, while the AN sends a response to this to the SMF, the AN may transmit QoS flow and radio bearer mapping information or information about a QoS flow mapped to one radio bearer to the SMF. Upon receiving this, the SMF may newly update the measurement configuration in consideration of the mapping information in the AN. Through this, the SMF can perform measurement on only one QoS flow for QoS flows bound to one radio bearer in the AN (e.g., QoS flows mapped to one radio bearer). For example, the SMF may transmit the updated measurement configuration to the UE and/or UPF. Then, the UE and/or UPF may perform measurement on only one QoS flow for QoS flows bound to one radio bearer (e.g., QoS flows mapped to one radio bearer).

Performing the measurement for only one QoS flow may mean that the measurement performed for this QoS flow is also applied to other QoS flows sharing the DRB. For example, when a UE and/or a UPF perform measurement of one QoS flow among QoS flows bound to one radio bearer (e.g., QoS flows mapped to one radio bearer), measurement of this QoS flow may be equally applied to other QoS flows sharing a radio bearer. For example, in this case, the UE and/or the UPF may determine that measurement of one QoS flow among QoS flows(e.g., QoS flows mapped to one radio bearer) bound by one radio bearer can be reused for other QoS flows(i.e., other QoS flows sharing a radio bearer). Accordingly, the UE and/or UPF may not perform measurements on other QoS flows sharing a radio bearer.

### 4. Fourth example of the disclosure of the present specification

In the fourth example of the disclosure of the present specification, an example of an operation in which a terminal transmits a message to a UPF is described.

According to the fourth example of the disclosure of the present specification, when the terminal receives a PMF message from the UPF, the terminal may transmit a PMF response to the received PMF message to the UPF. At this time, while transmitting the PMF response, the terminal may notify the UPF that measurement of the corresponding QoS flow is unnecessary. For example, the terminal may transmit a PMF response message including information indicating that measurement of the corresponding QoS flow is unnecessary to the UPF.

In addition, so that UPF can use measurements for other QoS flows, the UE may inform the UPF of information on the QoS flow for which measurement is to be performed (information on one of the QoS flows bound to the same radio bearer). When the UPF receives such a message from the UE, the UPF may not perform measurement for the corresponding QoS flow any more. If the radio bearer mapping information is changed afterwards, by sending a PMF message containing information about the QoS flow for which the UE stopped measurement to the UPF, measurement of the corresponding QoS flow can be resumed. At this time, the terminal transmits a PMF message including information indicating that the QoS flow mapping information is changed and measurement is performed again, or, even if the terminal simply transmits only the PMF message, the UPF may interpret this implicitly as meaning that the measurement for the corresponding QoS flow is re-performed.

### 5. Fifth example of the disclosure of the present specification

In the fifth example of the disclosure of the present specification, an example of QoS flow measurement is described.

When the UE performs measurement for each QoS flow using a PMF message, the UE and UPF must transmit the PMF message through the target QoS flow. Two methods may be possible to support this:
Option 1) For the PMF message, the SMF may provide the necessary QoS rule(s) and N4 rule(s) to the UE and UPF.
Option 2) The UE and UPF may ignore QoS rule(s) and N4 rule(s) for the PMF message and transmit the PMF message through the target QoS flow.

Option 1 is more consistent with the overall QoS design, but each PMF message sent over the QoS flow must use different PMF address information (e.g., different address or port number). This means that the UE or UPF must allocate a different PMF IP address or port for each QoS flow. If the UE allocates a different address, based on the information required for the SMF to generate QoS rules and N4 rules, the information can be transmitted to the network. However, this may result in additional NAS signaling. So it might make sense for the UPF to assign a different address.

Option 2 may be a simpler approach since the UE and UPF do not need to manage different PMF addresses for each QoS flow. However, this is not consistent with the general QoS framework. The UE and UPF may ignore existing QoS rule(s) and N4 rule(s) when sending a PMF message through a QoS flow. In addition, when the 3GPP access leg is established through the EPC, transmission of the PMF message through the dedicated bearer may not be supported by the existing modem. Therefore, if one of the 3GPP access legs is established in the EPC, this option may not be supported.

In 5GS, different from EPS, multiple QoS flows can be mapped to a single radio bearer in the NG-RAN. If such mapping is done by the NG-RAN, per QoS flow level measurement does not provide much gain as end-to-end performance largely depends on radio performance. Considering that there is no existing mechanism to enable the NG-RAN not to combine multiple QoS flows into one radio bearer, an additional information needs to be defined so that QoS flows that requires per QoS flow measurement are not mapped to a single radio bearer. However, it impacts RAN which may not be acceptable for this study. Other possibility is reporting QoS flow to radio bearer mapping information to the UPF so that measurement can be performed only for a one of QoS flows that are mapping to single radio bearer.

### 6. Sixth example of the disclosure of the present specification

A sixth example of the disclosure of the present specification describes an example of a method of improving PMF to support QoS flow measurement (e.g., RTT measurement, Packet Loss Rate (PLR) measurement, etc.).

For example, the sixth example of the disclosure of the present specification describes an example of PMF improvement to support RTT measurement and PLR measurement for each QoS flow.

Regarding ATSSS, Access Network Performance Measurements may be supported. Hereinafter, Access Network Performance Measurements will be described.

When the MA PDU session is established, the network may provide Measurement Assistance Information to the UE. The measurement assistance information can be used to determine the measurement that the UE needs to perform in both accesses, and the measurement assistance information can be used to determine whether the UE needs to send a measurement report to the network.

The measurement assistance information may include addressing information of a Performance Measurement Function (PMF) in UPF, and the UE may transmit a PMF protocol message in the manner shown in the following example:
- In the case of an IP type PDU session, measurement assistance information may include one IP address for PMF, User Datagram Protocol (UDP) port related to 3GPP access, and another UDP port related to non-3GPP access;
- In the case of an Ethernet type PDU session, measurement assistance information may include one MAC address related to 3GPP access and another MAC address related to non-3GPP access.

NOTE 1: To protect the PMF in UPF (e.g., Distributed Denial of Service (DDOS) blocking for PMF), IP address of PMF is accessible only from UE IP address through N3/N9 interface.

NOTE 2: After the MA PDU session is released, the same UE IP address/prefix for the MA PDU session may not be assigned to another UE within a short time.

Access measurement can be performed for multiple QoS Flows. The SMF indicates whether access measurement over multiple QoS Flows are supported in the Measurement Assistance Information. When the access measurements are performed over a QoS Flow, the UE and UPF shall send the PMF messages over the QoS Flow the UE and UPF wants to measure.

As shown in Note X below, the UPF may infer and find out that multiple QoS flows are mapped to one AN resource without signaling from the UE. For example, UPF can perform measurement for each QoS flow. As a result of the measurement, if the measurement of some QoS flows shows almost similar results, the UPF may determine that corresponding QoS flows are mapped to one AN resource. In addition, in the case of a UE, the UE may directly know mapping information (e.g., mapping information between a QoS flow and an AN resource). When multiple QoS flows are mapped to the same AN resource, when a UE performs access measurement, the UE can perform measurement for only one QoS flow. Thus, based on the access measurement performed by the terminal, the UPF can infer that a QoS flow for which the UE does not perform measurement is mapped to the same AN resource as other QoS flows.

Based on this, when the terminal and UPF perform Packet Loss Rate (PLR) measurement, the terminal and the UPF may perform the same operation as the example related to "Packet Loss Rate measurement" described below. For example, in the case of a QoS flow that is mapped to the same AN resource and does not require access measurement, the terminal may not transmit a counting request for PLR measurement for this QoS flow to the UPF. Also, if mapping information between QoS Flow and AN resource is changed, by not sending counting requests for QoS flows that do not require measurement, the terminal may also abort the PLR measurement. In addition, for QoS Flow that needs to be newly measured, the terminal may perform PLR measurement by sending a counting request to the UPF. In this way, since packet counting for PLR can be performed only for QoS flows that require measurement, it has the advantage of reducing the overhead of UE and UPF.

Based on implementation (e.g., QoS Flow to AN resource mapping information in the UE, detection of very similar or same measurement results for some of QoS Flows in the UPF) if the PMF detects that multiple QoS Flows are mapped to single AN resources, access measurement does not need to be performed for all of the QoS Flows.

The UPF may perform an operation of determining whether QoS flows are mapped to the same AN resource as in the following example. For example, based on an implementation-dependent timer, if the measurement results of QoS Flows are similar or identical to each other during the timer operation period, the UPF may determine that QoS flows are mapped to the same AN resource. For example, based on an implementation-dependent timer (e.g., 1 minute), if the results of a certain number of measurements for QoS Flows are similar or the same during the timer operation period, the UPF may determine that QoS flows are mapped to the same AN resource. This determination method may also be used by the UE.

For reference, the SMF and/or PCF may indicate to the UE which QoS flow the measurement should be performed on. Alternatively, the target QoS flow for which the UE and/or UPF performs measurement may be determined according to UE implementation and/or UPF implementation.

Addressing information of the PMF in the UPF may be retrieved by the SMF during the N4 session establishment procedure.

The following PMF protocol messages may be exchanged between the UE and the PMF:
- Messages allowing Round Trip Time (RTT) measurement, i.e. when "Smallest Delay" or "Load-Balancing" Steering Mode is used;
- Messages allowing Packet Loss Rate (PLR) measurement, i.e. when "Load Balancing" Steering Mode is used;
- A message for the UE to report access availability/unavailability to the UPF.

For the PMF protocol message for access availability/unavailability reporting exchanged between the UE and the UPF, a QoS flow associated with default QoS rules for available access(s) may be used. A PMF protocol message for access measurement exchanged between the UE and the UPF may use the QoS flow of access for which measurement is performed.

The QoS flow related to the basic QoS rule for the MA PDU session may be a non-GBR QoS flow.

For PMF protocol messages, the UE does not apply ATSSS rules, and the UPF does not apply Multimedia-Authentication-Request (MAR) rules.

The UE may request a MA PDU session and indicate it is capable to support the MPTCP functionality with any steering mode and the ATSSS-LL functionality with only the Active-Standby steering mode. In this case, the network may send Measurement Assistance Information for the UE to send Access availability/unavailability reports to the UPF. In this case, the UE and UPF shall not perform RTT measurements using PMF as the UE and UPF can use measurements available at the MPTCP layer.

In the description of the RTT measurement, the description related to the RTT measurement of "II. Techniques and procedures related to the disclosure of the present specification" may be applied. Additionally, the following may be applied to RTT measurement. RTT measurements can be defined to support either "Minimum Delay" or "Load Balancing" Steering Modes. When a PMF message needs to be transmitted through a QoS flow, both the UE and the UPF may include the QFI in the PMF message. For reference, the manner in which the PMF message is transmitted through a specific QoS flow is not specifically defined. So that QoS rules and/or N4 rules do not apply, as uses different PMF addresses for each QoS flow, or as the UE and the UPF uses special processing, QoS rules and/or N4 rules may not be applied. In the latter case, QFI information must be included in the PMF message.

Hereinafter, an example of "Packet Loss Rate measurement" will be described.

The PLR measurements can be calculated by exchanging the number of transmitted packets between the UE and UPF. The UE and the UPF may report the calculated PLR from one side to the other. RTT measurements are defined to support the "Load Balancing" steering mode.

The calculation of the PLR by the UE and by the UPF is based on the following mechanism:
1. In the case of UL PLR, descriptions such as the following examples may be applied.
   - The UE requests the UPF to count the number of received UL packets by transmitting PMF message. The UPF may start the counting of the received UL packets over the QoS Flow and access network the PMF message is received. The UE starts counting the transmitted UL packets over the QoS Flow and access network the PMF message is sent.
   - The UE may request the UPF to report the number of received UL packets via PMF message. The UPF reports the counted number of the received packets between the PMF message for counting request and PMF message for counting report. For example, the UPF may count packets received between the time when the PMF message for counting request is received and the time when the PMF message for counting report is received, and report the number of counted packets to the UE.
      NOTE: The PMF message for counting report can also indicate to count packets if the UE wants to measure the Packet Loss Rate continuously.
   - The UE may calculate the UL Packet Loss Rate based on the local counting result of the number of transmitted UL packets and the number of received UL packets reported from the UPF. Here, the local counting result may mean a result of counting the number of UL packets transmitted by the UE.
      It is not yet defined how buffered packets will be considered or whether buffered packets will be considered.
2. In the case of DL PLR, descriptions such as the following examples may be applied.
   - The UPF requests the UE to count the number of received DL packets via PMF message. The UE may start the counting of the received DL packets over the QoS Flow and access network the PMF message is received. The UPF starts counting the transmitted DL packets over the QoS Flow and access network the PMF message is sent.
   - The UPF requests the UE to report the number of received UL packets via PMF message. The UE reports the counted number of the received packets between the PMF message for counting request and PMF message for counting report. For example, the UE may count packets received between the time when the PMF message for counting request is received and the time when the PMF message for counting report is received, and report the number of counted packets to the UPF.
      NOTE: The PMF message for counting report can also indicate to count packets if the UPF wants to measure the Packet Loss Rate continuously.
   - The UPF may calculate the DL Packet Loss Rate based on the local counting result of the number of transmitted DL packets and the number of received DL packets reported from the UE. Here, the local counting result may mean a result of counting the number of DL packets through which UPF is transmitted.
3. When the UP connection of the MA PDU session is deactivated on an access, no PMF messages are sent on this access. The PMF in the UPF shall not send PMF message on this access if the UP connection is not available or after it receives notification from the (H-)SMF to stop sending the PMF message on this access.
4. The UE and the UPF derive an estimation of the average PLR per QoS Flow over an access type by averaging the PLR measurements obtained over this access.

### 7. Seventh example of the disclosure of the present specification

In the seventh example of the disclosure of the present specification, according to the contents described in various examples of the disclosure of the present specification, examples of operations performed by the UE and/or network are described. For example, in the seventh example of the disclosure of the present specification, an operation combining at least one or more of the first to sixth examples of the disclosure of the present specification described above may be performed.

The following drawings are made to explain a specific example of the present specification. Since the names of specific devices or names of specific signals/messages/fields described in the drawings are provided as examples, the technical features of the present specification are not limited to the specific names used in the drawings below.

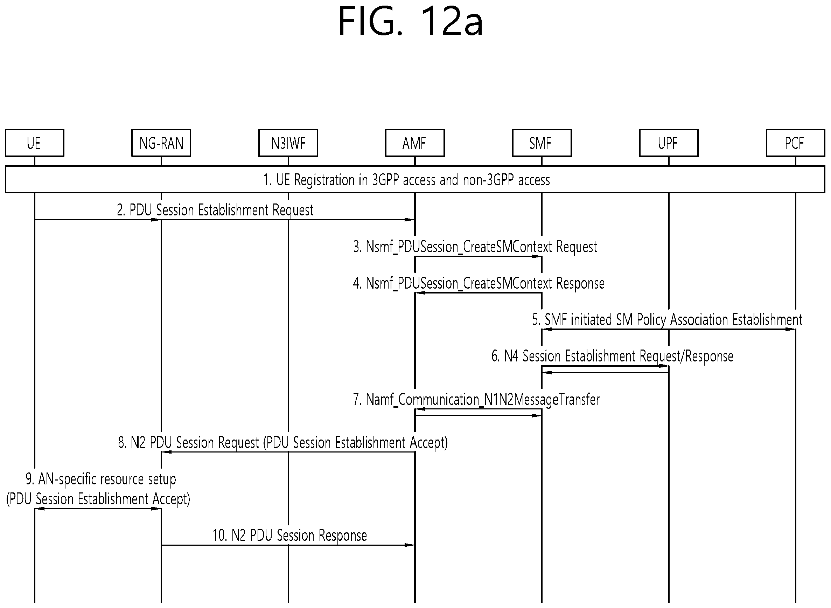

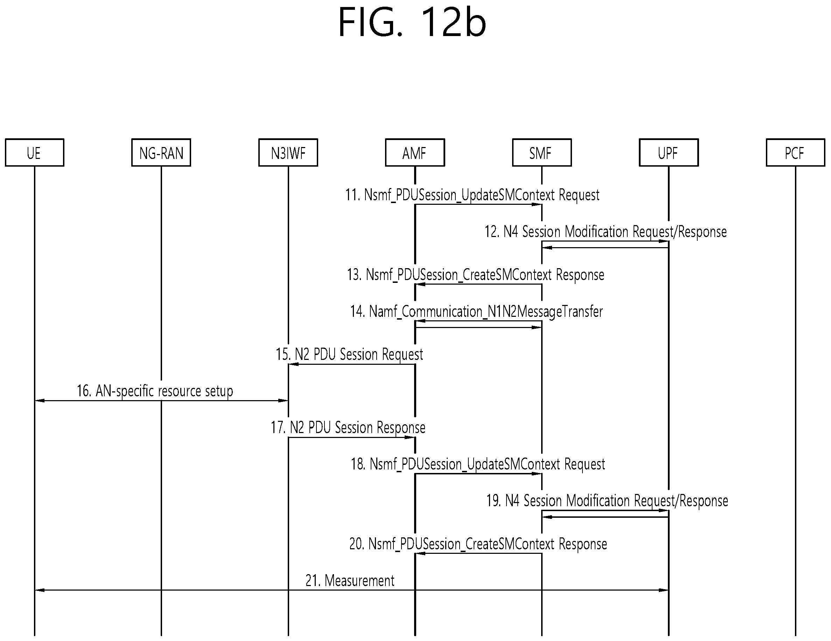

**FIGS. 12a** **and** **12b** **show a first example of an operation according to a seventh example of the disclosure of the present specification.**

For reference, the operations shown in the examples of FIGS. 12a and 12b are merely examples, and the scope of the disclosure of the present specification is not limited by the operations shown in FIGS. 12a and 12b. For example, even if the operations are not shown in FIGS. 12a and 12b, the operations described in the first to sixth examples of the disclosure of the present specification may be performed.

The examples of FIGS. 12a and 12b show examples of how the SMF allocates different resources for each QoS flow. According to the examples of FIGS. 12a and 12b, the SMF may perform an operation of requesting different resource allocation for each QoS flow.
1) It can be assumed that the terminal is registered in the network through 3GPP access and non-3GPP access.
2) To create (or establish) an MA PDU Session, the UE may transmit a UL NAS Transport message that transmits a PDU Session Establishment Request. At this time, the terminal may transmit the message by setting the UL Request Type of the UL NAS Transport message to "MA PDU request" indicating requesting the MA PDU Session. In addition, the terminal may transmit a message by including ATSSS capability information in the PDU Session Establishment Request message. The ATSSS capability information may be capability information on whether the UE can perform the ATSSS-related operation described through various examples above.
3-4) The AMF may transmit the PDU Session Establishment Request message transmitted by the UE to the SMF.
5) The SMF may transmit the ATSSS capability information transmitted by the UE to the PCF. The PCF may generate a PCC rule based on the ATSSS capability information of the terminal. The PCF may transmit the generated PCC rule to SMF.
6) Based on the PCC rule received from the PCF (or based on the information configured in the SMF if the PCF is not used), the SMF may create an ATSSS rule to be transmitted to the terminal and an N4 rule to be transmitted to the UPF.
7) While accepting the MA PDU Session establishment, the SMF can put the generated ATSSS rule in the PDU Session Establishment Accept message and transmit it to the terminal. In addition, the SMF may also transmit an N2 message for allocating resources for an MA PDU session in 3GPP access. At this time, if the SMF determines that measurement is necessary for each QoS flow according to the PCC rule, the SMF may transmit an indication requesting allocation of different resources for each QoS flow to the UPF together.
8) The AMF may transmit the N2 message and PDU Session Establishment Accept message transmitted by SMF to NG-RAN.
9) The NG-RAN may perform a process of allocating resources necessary for the MA PDU Session while exchanging AN signaling with the UE. In addition, the NG-RAN may transmit a PDU Session Establishment Accept message to the UE along with this process. If the SMF makes a request to allocate different resources for each QoS flow, the NG-RAN may perform an operation of mapping each QoS Flow to another radio bearer.
10) The NG-RAN may inform the SMF via the AMF of that 3GPP access resources is successfully allocated.
11) The AMF may deliver the message transmitted by the NG-RAN to the SMF.
12) In order to update tunnel information transmitted by NG-RAN, the SMF may perform N4 Session Modification procedures with the UPF.
13) The SMF may transmit a response message for step 11) to the AMF.
14) The SMF may transmit an N2 message for allocating resources for MA PDU Session in non-3GPP access. At this time, if the SMF determines that measurement is necessary for each QoS flow according to the PCC rule, the SMF may transmit together with an indication requesting allocation of different resources for each QoS flow to the UPF.
15) The AMF may transmit the N2 message received from the SMF to the N3IWF.
16) The N3IWF may perform a process of allocating resources necessary for the MA PDU Session while exchanging AN signaling with the UE. If the SMF makes a request to allocate different resources for each QoS flow, the N3IWF may create all different Internet Protocol security (IPsec) tunnels for each QoS flow to map to different AN resources for each QoS flow. The N3IWF may transmit the "indication requesting allocation of different resources for each QoS flow" received from the SMF together with the additional QoS Information. Upon receiving this, the UE may request a QoS resource of non-3GPP access in consideration of the corresponding indication.
17) The N3IWF may inform the SMF via the AMF that the non-3GPP access resource has been successfully allocated.
18) AMF may deliver the message transmitted by NG-RAN to SMF.
19) The SMF can perform N4 Session Modification procedures with the UPF to update the tunnel information transmitted by N3IWF.
20) The SMF may transmit a response message for step 18) to the AMF.
21) The UE and the UPF can perform measurement for each QoS flow based on the information transmitted by the SMF.

The following drawings are made to explain a specific example of the present specification. Since the names of specific devices or names of specific signals/messages/fields described in the drawings are provided as examples, the technical features of the present specification are not limited to the specific names used in the drawings below.

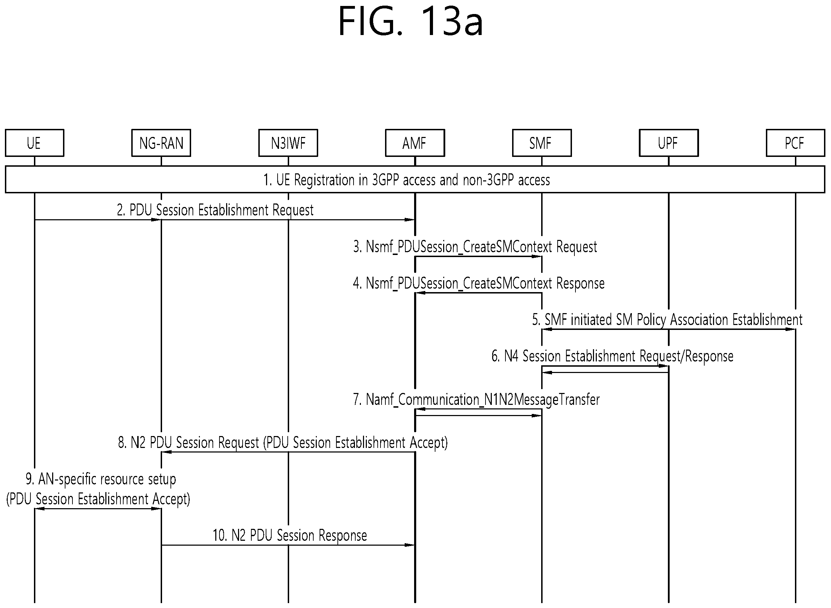

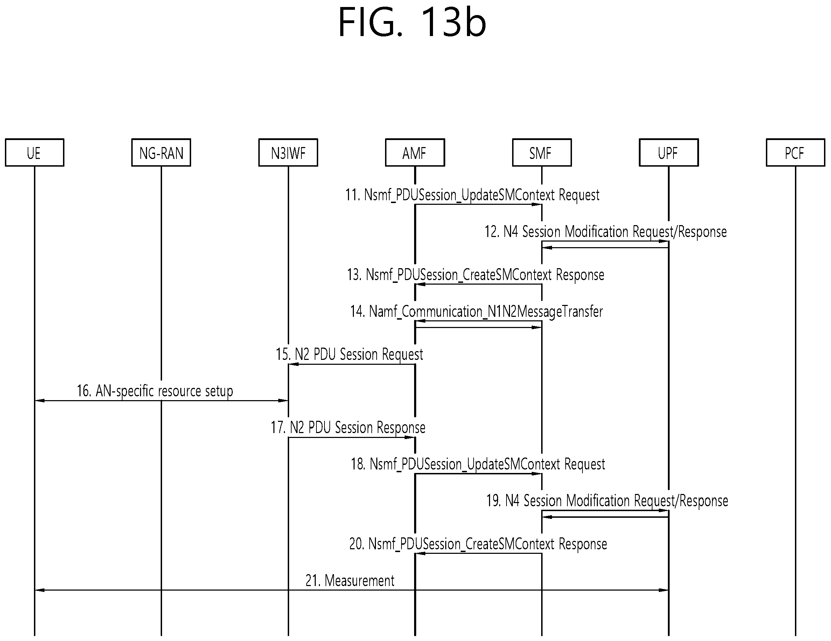

**FIGS.13a** **and** **13b** **show a second example of an operation according to a seventh example of the disclosure of the present specification.**

For reference, the operations shown in the examples of FIGS. 13a and 13b are merely examples, and the scope of the disclosure of the present specification is not limited by the operations shown in FIGS. 13A and 13B. For example, even if the operations are not shown in FIGS. 13a and 13b, the operations described in the first to sixth examples of the disclosure of the present specification may be performed.

The examples of FIGS. 13a and 13b show an example of how a UE determines based on mapping information between an AN resource and a QoS flow. According to the examples of FIGS. 13a and 13b, the terminal may perform an operation of determining based on mapping information between an AN resource and a QoS flow.
1-6) 1) to 6) may be performed in the same manner as 1) to 6) in the examples of FIGS. 12a and 12b.
7) While accepting the MA PDU Session establishment, the SMF can put the generated ATSSS rule in the PDU Session Establishment Accept message and transmit it to the terminal. In addition, the SMF may also transmit an N2 message for allocating resources for an MA PDU session in 3GPP access.
8) The AMF can transmit the N2 message and PDU Session Establishment Accept message transmitted by the SMF to the NG-RAN.
9) The NG-RAN may perform a process of allocating resources necessary for the MA PDU Session while exchanging AN signaling with the terminal. In addition, the NG-RAN may transmit a PDU Session Establishment Accept message to the terminal along with this process. In this process, the terminal may receive mapping information between the radio bearer of 3GPP access and the QoS flow.
10) The NG-RAN may inform the SMF via the AMF. of the successful allocation of 3GPP access resources
11) The AMF may deliver the message transmitted by the NG-RAN to the SMF.
12) In order to update tunnel information transmitted by NG-RAN, the SMF can perform N4 Session Modification procedures with the UPF.
13) The SMF may transmit a response message for step 11) to the AMF.
14) The SMF may transmit an N2 message for allocating resources for MA PDU Session in non-3GPP access.
15) The AMF may transmit the N2 message received from the SMF to the N3IWF.
16) The N3IWF may perform a process of allocating resources necessary for the MA PDU Session while exchanging AN signaling with the terminal. In this process, the terminal may receive mapping information between the radio bearer of 3GPP access and the QoS flow.
17) The N3IWF may inform the SMF that the non-3GPP access resource has been successfully allocated via the AMF.
18) The AMF may deliver the message transmitted by NG-RAN to SMF.
19) The SMF may perform N4 Session Modification procedures with the UPF to update the tunnel information transmitted by the N3IWF.
20) The SMF may transmit a response message for step 18) to the AMF.
21) Based on AN resource-QoS Flow mapping information in 3GPP access received in steps 9) and 16) and AN resource-QoS Flow mapping information in non-3GPP access, and the measurement assistance information transmitted by the SMF, the terminal may perform measurement for each QoS flow. For reference, measurement assistance information may be included in the PDU session establishment acceptance message, the terminal may receive measurement assistance information in step 9). At this time, if QoS flows that require measurement for each QoS flow are mapped to the same AN resource, the UE may perform measurement only for one of the QoS flows mapped to the same AN resource. And, the UE may apply the measurement result for one QoS flow to QoS flows mapped to the same AN resource as the corresponding QoS flow. Since AN resource-QoS Flow mapping in 3GPP access and non-3GPP access may be different, the terminal may perform determination (e.g., determination to perform measurement only for one of the QoS flows mapped to the same AN resource, decision to apply to QoS flows mapped to the same AN resource as the corresponding QoS flow, etc.) for each access.

### 8. Eighth example of the disclosure of the present specification

An eighth example of the disclosure of the present specification describes an example of an operation of a terminal (e.g., UE) and/or a network according to various examples of the disclosure of the present specification described above. For reference, the operation of the terminal and/or the operation of the network (e.g., UPF) described in the eighth example of the disclosure of the present specification is only an example, the scope of the disclosure of the present specification is not limited by the content described in the eighth example of the disclosure of the present specification. For example, the terminal and/or network may perform the operations described in the first to seventh examples of the disclosure of the present specification, even if not described in the eighth example of the disclosure of the present specification.

The following drawings are made to explain a specific example of the present specification. Since the names of specific devices or names of specific signals/messages/fields described in the drawings are provided as examples, the technical features of the present specification are not limited to the specific names used in the drawings below.

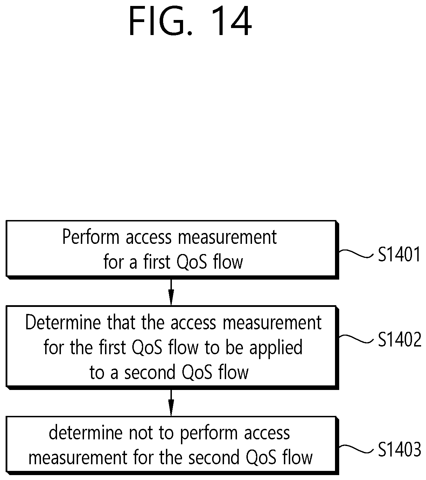

**FIG.14** **illustrates an example of an operation of a UE and/or an operation of a UPF according to the disclosure of the present specification.**

For reference, the operation of the UE and/or the operation of the UPF shown in the example of FIG. 14 is only an example, and the scope of the disclosure of the present specification is not limited by the operation shown in FIG. 14. For example, the UE and/or UPF may perform the operations described in the first to seventh examples of the disclosure of the present specification even though the operation is not shown in FIG. 14 .

For reference, the operation shown in the example of FIG. 14 may be an operation performed by the UE. In addition, the UPF may also perform the operation shown in the example of FIG. 14. Hereinafter, the example of FIG. 14 will be described focusing on the operation of the UE, and the operation of the UPF will also be described.

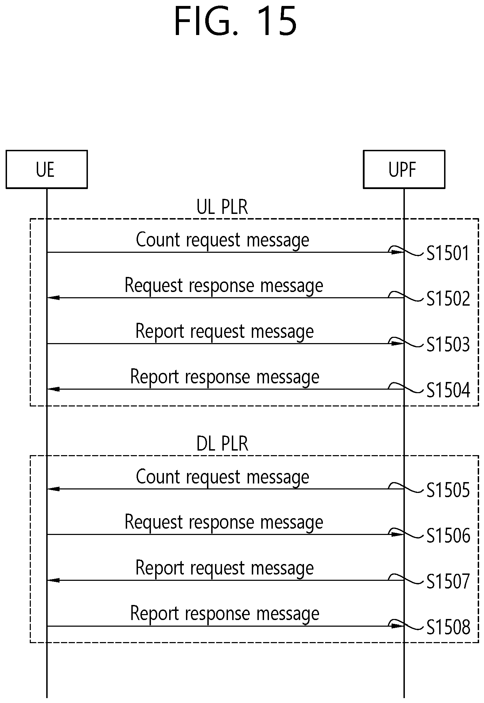

In step S1401, the UE may perform access measurement for the first QoS flow. For example, the UE may perform access network performance measurements on the first QoS flow. As an example, the UE may perform Packet Loss Ratio (PLR) measurement for the first QoS flow. An example of PLR measurement will be described in detail with reference to FIG. 15 below.

In step S1402, the UE can determine that access measurement for the first QoS flow can be applied to the second QoS flow. For example, based on the mapping between AN resources and QoS flows, the UE can determine that access measurements for a first QoS flow can be applied to a second QoS flow. For example, when the first QoS flow and the second QoS flow are mapped to the same AN resource, the UE may determine that the access measurement for the first QoS flow can be applied to the second QoS flow.

In step S 1403, the UE may decide not to perform access measurement for the second QoS flow. For reference, the first QoS flow and the second QoS flow may correspond to the same MA PDU session. For example, the UE must perform access measurement for each QoS flow, but if access measurement for the first QoS flow can be reused for the second QoS flow, the UE may not perform access measurement for the second QoS flow. The UE may equally apply access measurement for the first QoS flow to the second QoS flow.

As described above, the operations shown in the example of FIG. 14 may also be performed by UPF. For example, in step S1401, the UPF may perform access measurement for the first QoS flow. In step S 1402, the UPF may determine that access measurement for the first QoS flow can be applied to the second QoS flow. In step S1403, the UPF may decide not to perform access measurement for the second QoS flow.

The following drawings are made to explain a specific example of the present specification. Since the names of specific devices or names of specific signals/messages/fields described in the drawings are provided as examples, the technical features of the present specification are not limited to the specific names used in the drawings below.

**FIG.15** **shows an example of an operation related to PLR measurement according to the disclosure of the present specification.**

For reference, the operation related to the PLR measurement shown in the example of FIG. 15 is only an example, and the scope of the disclosure of the present specification is not limited by the operation shown in FIG. 15. An operation related to PLR measurement according to the example of FIG. 15 may be included in step S1401 of the example of FIG. 14. For example, even if the operation is not shown in FIG. 15, the operation related to the PLR measurement described in the first to seventh examples of the disclosure of the present specification may be performed.

In the example of FIG. 15 , steps S1501 to S1504 are examples of operations related to UL PLR measurement. Steps S1505 to S1508 are examples of operations related to DL PLR measurement. Operations related to UL PLR measurement and operations related to DL PLR measurement may be selectively performed or may be performed together.

For example, only operations related to UL PLR measurement (e.g., steps S1501 to S1504) may be performed, or only operations related to DL PLR measurement (steps S1505 to S1508) may be performed. For example, both operations related to UL PLR measurement (e.g., steps S1501 to S1504) and DL PLR measurement (steps S1505 to S1508) may be performed. For example, operations related to DL PLR measurement (steps S1505 to S1508) may be performed after operations related to UL PLR measurement (e.g., steps S1501 to step S1504) are performed. For example, operations related to UL PLR measurement (e.g., steps S1501 to S1504) may be performed after operations related to DL PLR measurement (steps S1505 to S1508) are performed. For example, operations related to DL PLR measurement (steps S1505 to S1508) and operations related to UL PLR measurement (e.g., steps S1501 to S1504) may be performed simultaneously.

In step S1501, the UE may transmit a count request message to the UPF. Here, the count request message may be, for example, a request message requesting the UPF to count the number of UL packets received through the target QoS flow (e.g., the first QoS flow). The request message may be a Performance Measurement Function (PMF) based message.

In step S 1502, the UPF may transmit a response message notifying that the count request message has been received to the terminal. After transmitting the response message to the count request message, the UPF may count the number of UL packets received through the target QoS flow (e.g., the first QoS flow). For example, the UPF may count the target QoS flow (e.g., the first QoS flow), that is, the number of UL packets received through the access network through which the count request message was received. And, after the count request message is transmitted, the UE may count the number of UL packets transmitted through the target QoS flow (e.g., the first QoS flow). For example, the UE may count the target QoS flow (e.g., the first QoS flow), that is, the number of UL packets transmitted through the access network through which the count request message is transmitted.

In step S1503, the UE may transmit a report request message to the UPF. For example, the report request message may be a message requesting the UPF to report the number of UL packets(e.g., number of UL packets counted by UPF) received through the target QoS flow (e.g., the first QoS flow). The report request message may also be a PMF-based message.

In step S1504, the UPF may transmit a report response message to the UE. The report response message may include information about the number of UL packets counted after the UPF last transmits the count response message(e.g., a message requesting to count the number of UL packets received through the target QoS flow).

After receiving the report response message, the UE may calculate the UL PLR based on the "number of UL packets received" received from the UPF and the number of UL packets (e.g., the number of UL packets counted by the UE after the UE transmits the report request message) transmitted by the UE.

In step S 1505, the UPF may transmit a count request message to the UE. Here, the request message may be, for example, a request message requesting the UE to count the number of DL packets received through the target QoS flow (e.g., the first QoS flow). The count request message may be a PMF-based message.

In step S1506, the UE may transmit a response message notifying that the count request message has been received to the UPF. After transmitting the response message to the count request message, the UE may count the number of UL packets received through the target QoS flow (e.g., the first QoS flow). For example, the UE may count the number of DL packets received through the target QoS flow (e.g., the first QoS flow), that is, the access network through which the request message was received. And, after the count request message is sent, the UPF may count the number of DL packets transmitted through the target QoS flow (e.g., the first QoS flow). For example, the UPF can count the number of DL packets transmitted through the target QoS flow (e.g., the first QoS flow), That is, the access network from which the count request message was sent.

In step S1507, the UPF may transmit a report request message to the UE. For example, the report request message may be a message requesting the UE to report the number of DL packets(e.g., number of DL packets counted by UPF) received through the target QoS flow (e.g., the first QoS flow). The report request message may also be a PMF-based message.

In step S1508, the UPF may transmit a report response message to the UE. The report response message may include information about the number of DL packets counted after the UE finally transmitted the count response message(e.g., a message requesting to count the number of DL packets received through the target QoS flow).

After receiving the report response message, the UPF may calculate the DL PLR based on the "number of DL packets received" received from the UE and the number of DL packets(e.g., number of DL packets counted by UPF after UPF sends report request message) transmitted by the UPF.

According to the disclosure of the present specification with reference to various examples, there is no need to perform access measurement for unnecessary QoS flows. According to the description in the disclosure of the present specification, measurement of multiple QoS flows can be efficiently performed. According to the description in the disclosure of the present specification, when measuring multiple QoS flows, waste of radio resources and/or waste of computing resources may be reduced. According to the description in the disclosure of the present specification, when measuring multiple QoS flows, waste of resources used for tasks such as counting packets can be reduced.

According to the disclosure of the present specification with reference to various examples, when the SMF sets up user plane resources to the AN, the SMF may perform an operation to inform whether QoS flows may be mapped to one radio bearer. Based on the mapping information between the QoS flow and the radio bearer received from the AN, the terminal may perform an operation to determine a QoS flow that does not require per QoS flow measurement and inform the network. When SMF requests user plane resource setup to AN, the AN may perform an operation of informing mapping information of the QoS flow and radio bearer to the SMF. Based on the mapping information between the QoS flow and the radio bearer received from the AN, the terminal may determine that per QoS flow measurement is not required. When the terminal receives a PMF message for a QoS flow that determines that per QoS flow measurement is not required, while transmitting a response to this, the UE may perform an operation notifying that measurement of the corresponding QoS flow is not required.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the disclosure of the present specification.

For reference, the operation of a network node (e.g., N3IWF, AMF, SMF, UPF, PCF etc.) or base station (e.g., NG-RAN, gNB, eNB, RAN, E-UTRAN etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the disclosure of the present specification is not limited to such specific embodiments, and thus, modifications, changes, or can be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication related to measurement by a user equipment (UE), the method comprising:
performing access measurement for a first Quality of Service (QoS) flow;
determining that the access measurement for the first QoS flow is to be applied to a second QoS flow; and
determining not to perform access measurement for the second QoS flow, based on that the access measurement for the first QoS flow is to be applied to the second QoS flow.

2. The method of claim 1,
based on the mapping between Access Network (AN) resources and QoS flow, the access measurement for the first QoS flow is determined to be applied to a second QoS flow.

3. The method of claim 1,
wherein the access measurement for the first QoS flow includes a packet loss rate (PLR) measurement for the first QoS flow.

4. The method of claim 1, wherein the performing further comprising:
transmitting a request message requesting to count the number of uplink (UL) packets received through the first QoS flow to a User Plane Function (UPF).

5. The method of claim 4, wherein the performing further comprising:
transmitting a report request message requesting to report the number of the received UL packets to the UPF.

6. The method of claim 5, wherein the performing further comprising:
receiving a report response message including information on the number of received UL packets from the UPF.

7. The method of claim 6, wherein the performing further comprising:
calculating a Packet Loss Rate (PLR) based on the number of received UL packets received from the UPF and the number of UL packets transmitted by the UE

8. A User Equipment (UE) for performing communication related to measurement, the UE comprising:
at least one processor; and
at least one memory storing instructions and operably electrically connectable with the at least one processor, wherein operations performed based on the instructions being executed by the at least one processor include:
performing access measurement for a first Quality of Service (QoS) flow;
determining that the access measurement for the first QoS flow is to be applied to a second QoS flow; and
determining not to perform access measurement for the second QoS flow, based on that the access measurement for the first QoS flow is to be applied to the second QoS flow.

9. The UE of claim 8,
wherein the UE is an autonomous driving device that communicates with at least one of a mobile terminal, a network, and an autonomous vehicle other than the UE.

10. An apparatus in mobile communication, the apparatus comprising:
at least one processor; and
at least one memory storing instructions and operably electrically connectable with the at least one processor, wherein operations performed based on the instructions being executed by the at least one processor include:
performing access measurement for a first Quality of Service (QoS) flow;
determining that the access measurement for the first QoS flow is to be applied to a second QoS flow; and
determining not to perform access measurement for the second QoS flow, based on that the access measurement for the first QoS flow is to be applied to the second QoS flow.

11. A non-transitory computer readable medium storing instructions,
wherein the instructions, when executed by one or more processors, cause the one or more processors to perform operations including:
performing access measurement for a first Quality of Service (QoS) flow;
determining that the access measurement for the first QoS flow is to be applied to a second QoS flow; and
determining not to perform access measurement for the second QoS flow, based on that the access measurement for the first QoS flow is to be applied to the second QoS flow.

12. A method for performing communication related to measurement, the method performed by a User Plane Function (UPF) node and comprising:
performing access measurement for a first Quality of Service (QoS) flow;
determining that the access measurement for the first QoS flow is to be applied to a second QoS flow; and
determining not to perform access measurement for the second QoS flow, based on that the access measurement for the first QoS flow is to be applied to the second QoS flow.

13. The method of claim 12,
based on the detection that the access measurement for the first QoS flow and the access measurement for the second QoS flow have very similar measurement results, or have identical measurement results, the access measurement for the first QoS flow is determined to be applied to the second QoS flow.

14. The method of claim 12, further comprising:
wherein the access measurement for the first QoS flow includes a packet loss rate (PLR) measurement for the first QoS flow.

15. The method of claim 12, wherein the performing further comprising:
transmitting a request message to a user equipment (UE) requesting to count the number of downlink (DL) packets received through the first QoS flow.

16. The method of claim 15, wherein the performing further comprising:
transmitting to the UE a report request message requesting to report the number of the received DL packets.

17. The method of claim 15, wherein the performing further comprising:
receiving a report response message including information on the number of the received DL packets from the UE.

18. The method of claim 17, wherein the performing further comprising:
calculating a Packet Loss Rate (PLR) based on the number of DL packets received from the UE and the number of DL packets transmitted by the UPF.

19. A User Plane Function (UPF) node for performing communication related to measurement, the UE comprising:
at least one processor; and
at least one memory storing instructions and operably electrically connectable with the at least one processor, wherein operations performed based on the instructions being executed by the at least one processor include:
performing access measurement for a first Quality of Service (QoS) flow;
determining that the access measurement for the first QoS flow is to be applied to a second QoS flow; and
determining not to perform access measurement for the second QoS flow, based on that the access measurement for the first QoS flow is to be applied to the second QoS flow.
